**Europäisches Patentamt**

**European Patent Office**

**Office européen des brevets**

(19)

(11) Veröffentlichungsnummer: **0 577 875 A1**

# EUROPÄISCHE PATENTANMELDUNG

(12)

(21) Anmeldenummer: **92111618.2**

(51) Int. Cl.5: **G06F 9/38**

(22) Anmeldetag: **09.07.92**

(43) Veröffentlichungstag der Anmeldung:
**12.01.94 Patentblatt 94/02**

(84) Benannte Vertragsstaaten:
**BE DE GB IT**

(71) Anmelder: **Siemens Nixdorf Informationssysteme Aktiengesellschaft**
**Fürstenallee 7**
**D-33102 Paderborn(DE)**

(72) Erfinder: **Huss, Rolf-Rüdiger, Dr.-Ing.**
**Lindacher Strasse 8**
**W-8000 München 60(DE)**

(74) Vertreter: **Fuchs, Franz-Josef, Dr.-Ing. et al**
**Postfach 22 13 17**
**D-80503 München (DE)**

(54) **Befehlsverarbeitungseinheit für nach dem Fliessbandprinzip arbeitende Datenverarbeitungsanlagen.**

(57) Jeder Aufbereitungsstufe der Fließbandsteuerung (PST) ist beginnend mit der Decodierstufe eine Freigabephase (DEC bzw. ADC bzw. TRA) und eine mit vorgegebenem Mindestzeitabstand einleitbare, die Freigabephase teilweise überlappende Umschaltephase (DECDON bzw. ADCDON bzw. TRADON) zugeordnet, wobei die Umschaltephase jeweils die Einleitung der Freigabephase der nächstfolgenden Aufbereitungsstufe und die Beendigung der steuernden Freigabephase sowie jede Freigabephase die Beendigung der steuernden Umschaltephase mit Überlappung steuert. Befehlsausführungsabhängige Signale (LASTEXC,FIREXC) steuern dabei das Einleiten der Freigabephase (DEC) für die Decodierstufe und die Beendigung der Umschaltephase (TRADON) der letzten Aufbereitungsstufe. Durch Hemmnisse im Verarbeitungsablauf ausgelöste Signale ($\overline{\text{DECWAIT}}$,ADCWAIT,BRACT bzw. ADCINLOK,TRAINLOK) können daher sowohl durch Sperren des Einleitens von Umschaltephasen (z.B. DEC-DON,ADCDON) als auch Sperren des Einleitens von Freigabephasen (z.B. ADC,TRA) in den Ablauf der Fließbandsteuerung (PST) eingreifen. Realisierung der einzelnen Phasen durch bistabile Steuerelemente (D1,D2,A1,A2,T1,T2), die durch Takte ($T_B$,$T_M$,$T_E$) im Maschinenzyklus gesteuert werden. Dadurch eindeutige Trennung der einzelnen Aufbereitungsaktivitäten mit leicht realisierbaren und Zeitverluste ersparenden Eingriffsmöglichkeiten in den Verarbeitungsablauf bei Störungen ohne großen Aufwand.

FIG 2

Die Erfindung betrifft eine Befehlsverarbeitungseinheit für nach dem Fließbandprinzip arbeitende Datenverarbeitungsanlagen entsprechend dem Oberbegriff des Patentanspruches 1.

Bei der nach dem Fließbandprinzip erfolgenden Befehlsaufbereitung und -ausführung werden die einzelnen Phasen einer Befehlsbearbeitung für mehrere Befehle zeitlich überlappend ausgeführt, so daß nach einer Vorlaufzeit mit jedem Fortschaltetakt des Fließbandes im Prinzip ein Befehl beendet werden kann - man siehe "Elektronische Rechenanlagen", 1973, Heft 2, Seiten 60 bis 65, insbesondere Abschnitt 2.5 "Befehls-Pipeline", Seite 63/64. Dieser Idealablauf läßt sich jedoch nur erreichen, wenn keine störenden Ereignisse auftreten, die zu Verzögerungen führen. Solche Störungen des Fließbandablaufes können hervorgerufen werden, wenn auszuführende Befehle nicht rechtzeitig bereitgestellt werden können, Sprungbefehle auftreten oder wenn im voraus bereitgestellte Befehle, Adressen oder Operanden von vorangehend bearbeiteten Befehlen nachträglich noch geändert werden. Die durch solche Störungen bedingten Eingriffe in die aus den Aufbereitungsstufen und der Befehlsausführungseinheit bestehende Ablaufkette bereiten in der Regel erhebliche und mit großem Aufwand verbundene Schwierigkeiten.

Die Fließbandsteuerung arbeitet ähnlich einer aus mehreren getakteten Registerstufen bestehenden Schiebekette, wobei den Registerstufen jeweils eine der Aufbereitungs- oder Verarbeitungsphasen zugeordnet sind. Dabei kann jede Registerstufe einen Befehl zur Aufbereitung oder Verarbeitung nur entgegennehmen, wenn sie frei ist oder zum Übernahmezeitpunkt frei wird, und eine Weiterleitung an die nächste Stufe kann jeweils nur erfolgen, wenn die Bearbeitung in der jeweiligen Stufe erfolgreich abgeschlossen ist. Bei störungsfreiem Arbeiten der Fließbandsteuerung kann daher mit jedem die Kette nach Ausführung verlassenden Befehl am Anfang ein neuer Befehl eingespeist werden.

Dieser im Prinzip einfache Steuermechanismus ist jedoch im Hinblick auf leistungfähige Verarbeitungseinheiten nicht einfach zu realisieren, da der erfolgreiche Abschluß der einzelnen Phasen zweckmäßig nur durch feste Zeitvorgaben feststellbar ist, die auch die Maschinenzyklusdauer beeinflussen. Sind aus Sicherheitsgründen die Zeitvorgaben und damit die Maschinenzyklusdauer groß, sinkt zwangsläufig die Maschinenleistung. Sind dagegen die Zeitvorgaben für das Erkennen aller eventuellen Störereignisse zu kurz, dann sind besondere Steuerungsmaßnahmen zur Behebung der Auswirkungen solcher Störungen erforderlich, die nur sehr schwierig und mit großem Aufwand zu realisieren sind. Außerdem bedingen diese Steuerungsmaßnahmen in der Regel Verzögerungen, die sich negativ auf die Rechnerleistung auswirken. Letzteres gilt insbesondere für mikroprogrammgesteuerte Fließbandsteuerungen.

Aufgabe der Erfindung ist es daher, eine Befehlsverarbeitungseinheit mit einer sicher arbeitenden und nur geringen Aufwand erfordernden Fließbandsteuerung zu schaffen, die eine hohe Rechnerleistung ermöglicht.

Diese Aufgabe wird durch die kennzeichnenden Merkmale des Patentanspruches 1 gelöst. Danach wird jeder Aufbereitungsstufe der Fließbandsteuerung eine Freigabephase und eine Umschaltephase zugeordnet, von denen die erste eingeleitet wird, wenn ein Befehl für die jeweilige Stufe zur Aufbereitung zur Verfügung steht, während die zweite Phase nach Ablauf einer vorgebenen Zeitdauer eingeleitet wird, wenn im Regelfall mit einem erfolgreichen Abschluß der Aufbereitung in der Freigabephase gerechnet werden kann. Durch die vorgegebenen Abhängigkeiten der einzelnen Steuerungsphasen ist eine klare Trennung der einzelnen Aufbereitungsaktivitäten möglich. Dabei können infolge der Überlappungen der im Wechselspiel aufeinanderfolgenden Phasen während der jeweiligen Freigabephase für die Aufbereitung noch nicht abgeschlossene Prüfungen auch noch nach dem Einleiten der Umschaltephase zu Ende geführt und deren Ergebnisse berücksichtigt werden, indem bei einer erkannten Störung einfach das Einleiten der Freigabephase der nachfolgenden Verarbeitungsstufe gesperrt wird, während bei frühzeitig erkennbaren Störungen bereits das Einleiten der Umschaltephase gesperrt wird. Dadurch sind durch Verarbeitungshemmnisse bedingte Eingriffe in den normalen Steuerungsmechanismus leichter und mit geringem Aufwand sicher steuerbar.

Für die Festlegung der einzelnen Phasen werden entsprechend der Weiterbildung nach Patentanspruch 2 zweckmäßig bistabile Steuerelemente verwendet, die mit vom Maschinenzyklus abgeleiteten Takten gesteuert werden.

Andere Weiterbildungen bezüglich der Eingriffe von durch Störungen verursachten Steuersignalen in den Steuerungsablauf der Fließbandsteuerung ergeben sich aus den weiteren Patentansprüchen.

Einzelheiten der Erfindung seien nachfolgend anhand der Zeichnung erläutert. Im einzelnen zeigen

Figur 1
den prinzipiellen Aufbau der Befehlsverarbeitungseinheit,

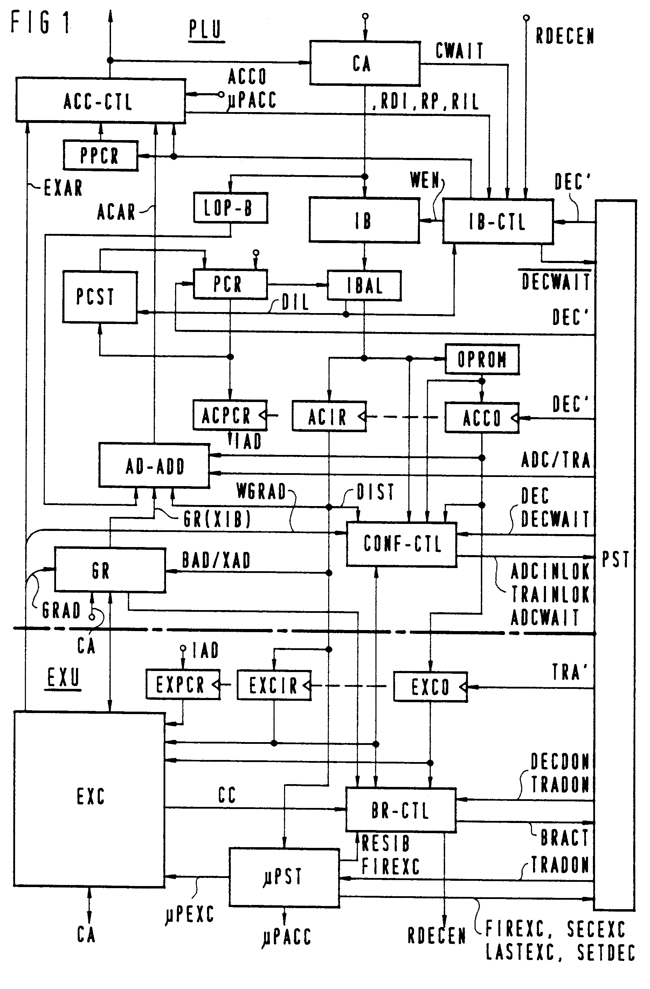

Figur 2
den Schaltungsaufbau der Fließbandsteuerung von Figur 1 für die einzelnen Aufbereitungsphasen,

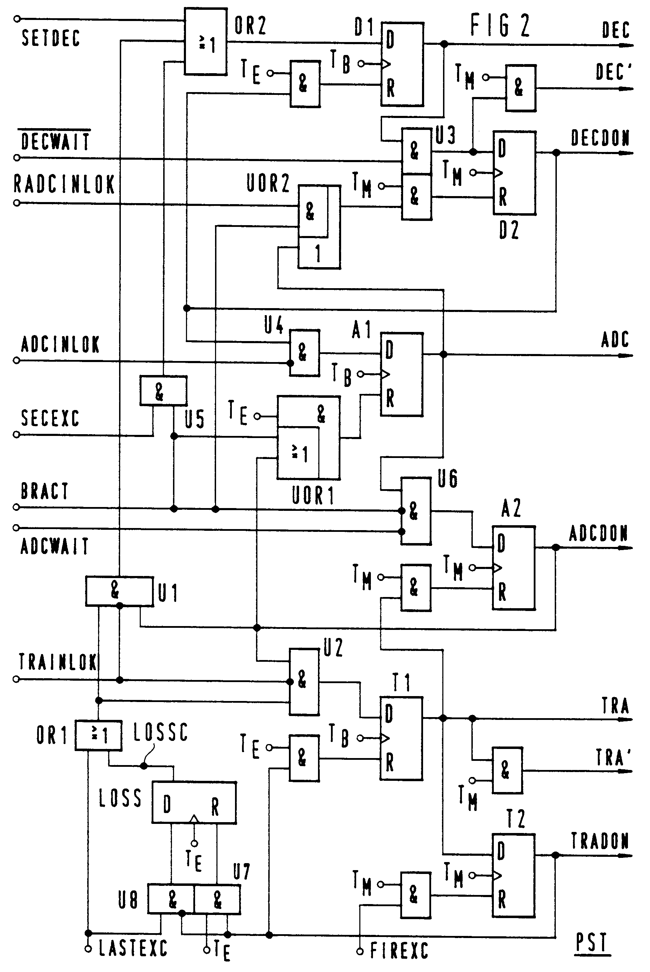

Figur 3
ein Ablaufdiagramm der Fließbandsteuerung von Figur 2 bei ungestörter Befehlsverarbeitung,

Figur 4

ein Blockschaltbild eines Teils der Befehlspuffersteuerung und der Verzweigungssteuerung, von Figur 1,

Figur 5 und Figur 6

Ablaufdiagramme für den Anlauf der Befehlsverarbeitung,

Figur 7 und Figur 8

Ablaufdiagramme bei der Verarbeitung von Sprungbefehlen mit erfüllter Sprungbedingung,

Figur 9

ein Ablaufdiagramm bei nicht rechtzeitiger Befehlsbereitstellung durch Nachladen,

Figur 10

ein Blockschaltbild der Konfliktüberwachungssteuerung von Figur 1,

Figur 11

ein Ablaufdiagramm bei verschiedenen Registerkonflikten und

Figur 12 und Figur 13

Ablaufdiagramme bei Registerkonflikten im Zusammenhang mit Ladebefehlen.

Das Blockschaltbild von FIG 1 zeigt den prinzipiellen Aufbau der neuen Befehlsverarbeitungseinheit, die in eine Befehlsaufbereitungseinheit PLU und eine Befehlsausführungseinheit EXU unterteilt ist, mit den für das Verständnis der Erfindung wesentlichen Elementen. Dabei ist unterstellt, daß alle Befehle und Operanden der Befehlsverarbeitungseinheit EXU vom nicht gezeigten Arbeitsspeicher der Datenverarbeitungsanlage über einen Cachespeicher CA zugeführt werden. Eine Zugriffssteuerung ACC-CTL steuert in bekannter Weise Zugriffe zum Cachespeicher CA bzw. dem übergeordneten Arbeitsspeicher. Befehle werden aus dem Cachespeicher unter Kontrolle der Befehlspuffersteuerung IB-CTL in den Befehlspuffer IB geladen und abhängig vom Befehlszähler PCR durch den Ausrichter IBAL einzeln nacheinander ausgewählt, so daß sie decodiert und für die weitere Steuerung nutzbar gemacht werden können. Zu diesem Zweck ist jedem Befehl im Steuerspeicher OPROM ein befehlsspezifischer Eintrag zugeordnet. Jeder dieser Einträge besteht aus einem Satz befehlsspezifischer Steuerbits, die in Verbindung mit zusätzlichen Taktimpulsen einen wesentlichen Teil der durch die einzelnen Befehle bedingten Steuerungsaufgaben in den weiteren Aufbereitungs- und Verarbeitungsstufen übernehmen. Zum Abschluß der Dekodierphase werden die vom Befehlszähler PCR, dem Ausrichter IBAL und dem Steuerspeicher OPROM zur Verfügung gestellten Daten in einen Registersatz, bestehend aus den drei Registern ACPR, ACIR und ACCO übernommen, so daß sie für die von der nächstfolgenden Aufbereitungsstufe auszuführende Operandenadreßrechnung zur Verfügung stehen. Nach der Weiterleitung der Daten kann durch die Befehlszählersteuerung PCST der Befehlszähler PCR auf den nächstfolgenden Befehl am Ausrichter IBAL eingestellt werden, so daß zeitlich parallel zur Adreßrechnung bereits der nachfolgende Befehl dekodiert werden kann.

Die Adreßrechnung erfolgt in bekannter Weise durch einen Adreßrechner AD-ADD anhand der jeweils bereitgestellten Teilgrößen GR(X/B) und DIST, die von den Angaben des Befehls im Register ACIR anhand der Adressen BAD und XAD aus dem allgemeinen Registersatz GR gelesen bzw. direkt zur Verfügung gestellt werden. Die jeweils ermittelte Operandenadresse ACAR des zweiten Operanden wird der Zugriffssteuerung ACC-CTL mitgeteilt, die dann im Rahmen der nachfolgenden Holphase das Lesen des benötigten Operanden und dessen Bereitstellung für die Befehlsausführungseinheit EXU veranlaßt. Eine Konfliktüberwachungssteuerung CONF-CTL überwacht dabei auftretende Konflikte.

Im Falle von Zwei-Operanden-Befehlen kann bei Verwendung nur eines Adreßrechners AD-ADD in der Holphase des zweiten Operanden die Adresse des ersten Operanden berechnet und in ein der Befehlsausführungseinheit EXU zugängliches Register geschrieben werden.

Nach erfolgreichem Abschluß der Holphase für den zweiten Operanden und gegebenenfalls der Adressenberechnung für den ersten Operanden werden die Inhalte des Registersatzes ACPCR, ACIR und ACCO parallel in die entsprechenden Register des Registersatzes EXPCR, EXCIR und EXCO übernommen und damit der Befehlsausführungseinheit EXU zur Verfügung gestellt, so daß der bis dahin von der Befehlsaufbereitungseinheit PLU aufbereitete Befehl zur Ausführung gelangen kann. Diese Befehlsausführungseinheit EXU ist im Gegensatz zur Aufbereitungseinheit PLU in herkömmlicher Weise mikroprogrammgesteuert, wobei die Mikroprogrammsteuerung $\mu$PST anhand des jeweils auszuführenden Befehls mit $\mu$PEXC die Ausführung durch die Steuereinheit EXC und mit $\mu$PACC Speicherzugriffe durch die Zugriffssteuerung ACC-CTL anhand der Adresse EXAR steuert.

Eine zusätzliche Programmverzweigungskontrolle BR-CTL überwacht in bekannter Weise das Vorliegen von Sprungbefehlen und anhand der von der Steuerung EXC gelieferten Anzeige CC, ob der Sprung erfüllt oder nicht erfüllt ist.

Kernstück der Erfindung ist dabei die Fließbandsteuerung PST, die abhängig von den betriebsabhängigen Signalen der Befehlspuffersteuerung IB-CTL, der Konfliktüberwachungssteuerung CONF-CTL und der Programmverzweigungskontrolle BR-CTL in Verbindung mit Signalen der Mikroprogrammsteuerung $\mu$PST das Durchlaufen der einzelnen Verarbeitungsphasen der Befehle steuert. Figur 2 zeigt den Schaltungsaufbau dieser Steuerung. Je zu steuernder Aufbereitungsstufe sind beginnend mit der Dekodierphase zwei Kippstufen, nämlich D1 und D2 für die Dekodierphase, A1 und A2 für die Adreßrechnungsphase und T1 und T2 für die Operandenholphase als Steuerelemente vorgesehen. Die ersten Steuerelemente D1, A1 und T1 kennzeichnen dabei jeweils die Freigabe der Aufbereitung in der zugehörigen Verarbeitungsstufe, während die zweiten Steuerelemente D2, A2 und T2 den erfolgreichen Abschluß der Aufbereitung in der zugehörigen Verarbeitungsstufe anzeigen. Entsprechend werden die zweiten Steuerelemente jeweils durch das zugehörige erste Steuerelement mit einem Zeitverzug gesetzt, der der normalen Aufbereitungsdauer in den einzelnen Stufen entspricht, während die zweiten Steuerelemente jeweils das erste Steuerelement der eigenen Stufe zurücksetzen und das erste Steuerelement der jeweils nächstfolgenden Stufe setzen, wobei das zweite Steuerelement T2 der letzten Aufbereitungsstufe zur Mikroprogrammsteuerung μPST der Befehlsausführungseinheit EXU überleitet und daher von dieser mit dem jeweils ersten Ausführungszyklus durch FIREXC zurückgesetzt wird.

Alle ersten Steuerelemente D1, A1 und T1 werden jeweils zu Beginn eines Maschinenzyklus mit einem Taktimpuls $T_B$ gesetzt und gegen Ende eines Maschinenzyklus mit einem Taktimpuls $T_E$ zurückgesetzt, während die zweiten Steuerelemente D2, A2 und T2 jeweils zur Mitte eines Maschinenzyklus, z.B. mit Taktimpuls $T_M$, gesetzt und zurückgesetzt werden.

Enden dabei die Rücksetzimpulse $T_E$ erst mit der Vorderflanke der Setzimpulse $T_B$ bzw. wird das Rücksetzen und Setzen der zweiten Steuerelemente - wie im vorliegenden Fall -, durch dieselben Taktimpulse $T_M$ bewirkt, dann ist ein Setzen der Steuerelemente jeweils nur mit dem jeweils übernächsten Taktimpuls möglich. Folglich wird bei ungestörtem Verarbeitungsfluß jeweils erst nach jedem zweiten Maschinenzyklus ein neuer Befehl in das Fließband eingespeist, und obwohl die Ausführungsdauer jeder Aufbereitungsstufe nur einen Maschinenzyklus erfordert, kann jeweils frühestens nach jedem zweiten Maschinenzyklus ein neuer aufbereiteter Befehl zur Ausführung gelangen. Eine derartige Wahl der Schaltzeitpunkte eignet sich daher für Befehlsverarbeitungseinheiten, deren Befehlsausführungseinheiten EXU zur Ausführung von Befehlen jeweils wenigstens zwei Maschinenzyklen benötigen, wobei für die beiden vorangehenden Aufbereitungsphasen, die mit dem Setzen von A1 und T1 eingeleitet werden, nur ein gemeinsamer Registersatz ACPCR/ACIR/ACCO (FIG 1) erforderlich ist.

Bei einer Mindestanzahl von einem Maschinenzyklus für die Ausführung eines Befehls muß dagegen bezüglich der ersten Steuerelemente D1, A1 und T1 der Rücksetzimpuls $T_E$ abgeklungen sein, damit mit dem nachfolgenden Taktimpuls $T_B$ zu Beginn des nächsten Maschinenzyklus wieder gesetzt werden kann. Analoges gilt für die zweiten Steuerelemente D2, A2 und T2, die im Gegensatz zur Darstellung mit getrennten, aufeinanderfolgenden Steuerimpulsen zurückgesetzt und dann wieder gesetzt werden.

Nach dem erstmaligen Setzen des ersten Steuerelementes D1 beim Anlauf der Befehlsverarbeitung mit SETDEC durch die Mikroprogrammsteuerung μPST der Befehlsausführungseinheit EXU wird bei störungsfreiem Verarbeitungsfluß nachfolgend das zweite Steuerelement D2 gesetzt, das dann das erste Steuerelement D1 zurücksetzt und das erste Steuerelement A1 der nächstfolgenden Aufbereitungsstufe setzt. Dieses Wechselspiel setzt sich fort, bis mit dem Setzen des Steuerelementes T2 der letzten Aufbereitungsstufe der aufbereitete Befehl der Befehlsausführungseinheit EXU übergeben wird, die dann mit FIREXC das Steuerelement T2 wieder zurücksetzt.

Ein erneutes Setzen des ersten Steuerelementes D1 der Dekodierstufe und damit das Einspeisen des jeweils nächsten Befehls in das Aufbereitungsfließband erfolgt dann normalerweise immer mit dem letzten, einen Befehl ausführenden Maschinenzyklus, was durch LASTEXC von der Mikroprogrammsteuerung μPST signalisiert wird. Sind für die Ausführung eines Befehls mehr als zwei Maschinenzyklen erforderlich, dann verzögert sich also die Einspeisung des übernächsten Befehls um die entsprechende Anzahl von Maschinenzyklen.

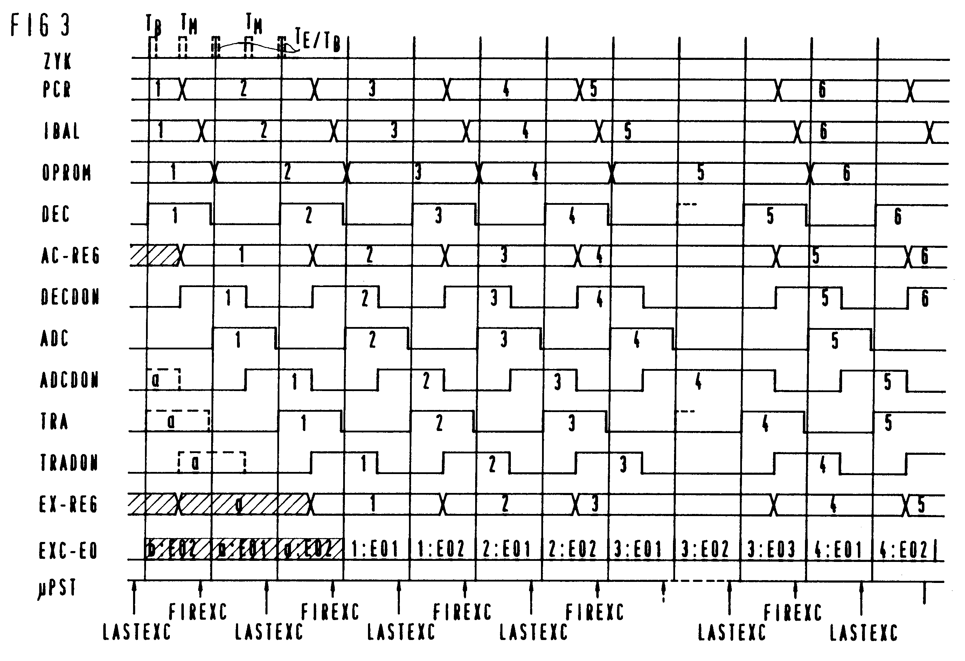

Figur 3 zeigt ein entsprechendes Ablaufdiagramm für einen ungestörten Aufbereitungs- und Verarbeitungsfluß der Befehle 1 bis 6 unter Einbeziehung der Fortschaltung des Befehlszählers PCR, der Befehlsbereitstellung durch den Ausrichter IBAL, der Bereitstellung der Steuerbits aus dem Steuerspeicher OPROM, der Fortschaltung des aus den Registern APCR, ACIR und ACCO bestehenden Registersatzes AC-REG, der Fortschaltung des aus den Registern EXPCR, EXIR und EXCO bestehenden Registersatzes EX-REG und der Verarbeitungszyklen EXC-EO für die aufbereiteten Befehle 1 bis 4, wobei der Befehl 3 statt zwei drei Maschinenzyklen 3:EO1 bis 3:EO3 benötigt.

Jedesmal wenn die mit Setzen des Steuerelementes D1 für DEC eingeleitete Dekodierphase erfolgreich abgeschlossen ist, wird mit dem Setzen des Steuerelementes D2 für DECDON der Befehlszähler PCR auf den nächsten Befehl, z.B. von 1 auf 2, umgeschaltet, so daß dieser am Ausgang des Ausrichters IBAL verfügbar wird und aus dem Steuerspeicher OPROM die befehlsspezifischen Steuerbits ausgelesen werden können.

Der neue Befehl ist damit bereitgestellt und kann dekodiert werden, was beim erneuten Setzen des ersten Steuerelementes D1 durch DEC angezeigt wird.

Nach erfolgreichem Abschluß der Dekodierung, der bis zum Eintreffen der Taktimpulse $T_M$ unterstellt wird, werden mit Setzen des zweiten Steuerelementes D2 für DECDON durch DEC' auch die Register AC-REG getaktet und die bereitgestellten Daten aus dem Befehlszähler PCR, dem Ausrichter IBAL und dem Steuerspeicher OPROM für den Befehl 2 übernommen, bevor sich diese ausgehend vom Fortschalten des Befehlszählers PCR durch Umschalten auf den nächstfolgenden Befehl 3 verändern. Nacheinander werden dann die Steuerelemente für ADC, ADCDON, TRA und TRADON gesetzt, wobei mit Setzen des zweiten Steuerelementes T2 für TRADON durch TRA' zugleich die Daten für den Befehl 2 aus dem Registersatz AC-REG in den Registersatz EX-REG der Befehlsausführungseinheit EXU übernommen werden, während der Registersatz AC-REG mit dem gleichzeitig auftretenden DEC' wiederum die Daten für den nächstfolgenden Befehl 3 übernehmen und der Befehlszähler PCR auf den Befehl 4 eingestellt wird.

Nach dem erfolgreichen Anlauf des Fließbandes steuert dann die Mikroprogrammsteuerung μPST mit dem Signal LASTEXC über das UND-Glied U1 das erneute Setzen von D1 und damit die Aufbereitung des nachfolgenden Befehls, wenn zwischenzeitlich kein Hemmnissignal aufgetreten und das Steuerelement A2 gesetzt ist.

Benötigt die Befehlsausführungseinheit EXU für die Ausführung eines Befehles mehr als zwei Maschinenzyklen, wie beispielsweise beim Befehl 3, dann verzögert sich das Signal LASTEXC der Mikroprogrammsteuerung μPST. Infolgedessen bleibt das dem Dateneingang D am Steuerelement T1 vorgeschaltete UND-Glied U2 nach Setzen des Steuerelementes A2 gesperrt, so daß mit dem nachfolgenden Steuerimpuls $T_B$ das Steuerelement T1 nicht unmittelbar gesetzt werden kann. Das Steuerelement A2 bleibt daher gesetzt, während das Steuerelement A1 mit dem nachfolgenden Steuerimpuls $T_E$ über die UND/ODER-Kombination UOR1 wieder zurückgesetzt wird. Erst mit dem einen Maschinenzyklus später eintreffenden Signal LASTEXC wird dann über das ODER-Glied OR1 und das UND-Glied U2 die Setzsperre für das Steuerelement T1 wieder aufgehoben und das Steuerelement D1 über das UND-Glied U1 und das ODER-Glied OR2 erneut gesetzt, womit ein weiterer Befehl 5 der Aufbereitung zugeführt wird.

Der bisher unterstellte störungsfreie Verarbeitungsfluß in der Befehlsverarbeitungseinheit ist nicht immer gegeben, sondern es können verschiedenartige Hemmnisse im Verarbeitungsablauf auftreten, z.B.

- wenn der nächste Befehl nicht rechtzeitig für die Dekodierung zur Verfügung steht, weil die Bereitstellung aus dem Speicher sich verzögert hat oder eine Programmverzweigung in Folge eines erfüllten Sprungbefehles durchzuführen ist, oder
- wenn Registerkonflikte auftreten und Adreßrechnungen für benötigte Operanden nicht rechtzeitig durchgeführt und die Operanden nicht rechtzeitig bereitgestellt werden können.

Alle betriebsbedingten Hemmnisse wirken in Form von Hemmnissignalen auf die Fließbandsteuerung PST ein. Es sind dies in erster Linie
- das von der Befehlspuffersteuerung IB-CTL gelieferte Signal $\overline{\text{DECWAIT}}$, das bei nicht rechtzeitiger Bereitstellung eines kompletten zu dekodierenden Befehls am Ausgang des Ausrichters IBAL den Abschluß der Dekodierphase durch Sperren des dem Setzeingang des Steuerelementes D2 vorgeschalteten UND-Gliedes U3 verhindert,
- das Signal ADCINLOK, das das Einleiten der ersten Adreßrechnungsphase durch Sperren des dem Setzeingang des Steuerelementes A1 vorgeschalteten UND-Gliedes U4 verhindert, und
- das Signal TRAINLOK, das im Falle einer zweiten Adreßrechnung während der Holphase durch Sperren des dem Setzeingang des Steuerelementes T1 vorgeschalteten UND-Gliedes U2 die Einleitung der zweiten Adreßrechnungsphase und gleichzeitig über das UND-Glied U1 das Dekodieren eines neuen Befehles verzögert.

Weitere betriebsabhängige Signale mit Auswirkung auf den Arbeitsablauf der Fließbandsteuerung PST sind
- das Signal BRACT im Falle eines erfüllten Sprungbefehles, wobei das zusätzliche Signal SECEXC den zweiten Ausführungszyklus des Sprungbefehles durch die Befehlsausführungseinheit EXU kennzeichnet und zusammen mit dem Signal BRACT über das UND-Glied U5 und das ODER-Glied OR2 die Dekodierphase für einen nachfolgend aufzubereitenden neuen Befehl durch Setzen des Steuerelementes D1 einleitet,
- das vom Signal ADCINLOK abgeleitete Signal RADCINLOK, das in Verbindung mit dem Signal BRACT im Falle eines erfüllten Sprunges bei einem Konflikt mit dem bereits in der Aufbereitung befindlichen linearen Folgebefehl anstelle des durch das frühere Signal ADCINLOK verhinderten Signals ADC über die UND/ODER-Kombination UOR2 das zweite Steuerelement D2 zurücksetzt, sowie
- das Signal ADCWAIT, das wie das Signal BRACT durch Sperren des dem Setzeingang des Steuerelementes A2 vorgeschalteten UND-Gliedes U6 den Abschluß der ersten Adreßrechnungsphase verhindert, wenn bei Ladebefehlen das in ein Mehrzweckregister zu ladende Wort wegen Überschreiten der Blockgrenze im Speicher zwei aufeinanderfolgende Zugriffszyklen erfordert und gleichzeitig ein Registerkonflikt besteht.

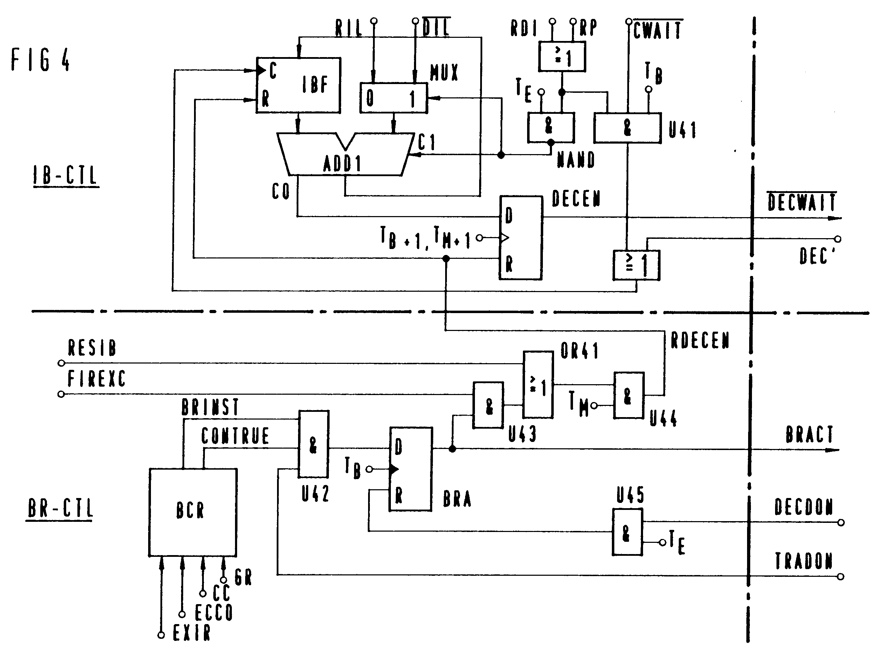

Figur 4 zeigt im oberen Teil ein Blockschaltbild zur Ableitung des Signals $\overline{DECWAIT}$ durch die Befehlspuffersteuerung IB-CTL. Das Register IBF kennzeichnet die jeweilige Füllung des Befehlspuffers IB mit Befehlshalbwörtern. Mit jedem Nachladen in den Befehlspuffer IB, was durch das Signal RDI bzw. RP entsprechender Merker angezeigt wird, wird der jeweilige Füllstand des Befehlspuffers um die Länge RIL, z.B. RIL = 4 Halbwörter, der nachgeladenen Befehlsmenge über den Auswahlschalter MUX durch den Addierer ADD1 erhöht und der gewonnene neue Füllstand in das Register IBF eingetragen. Andererseits wird mit jedem Fortschalten des Befehlszähler PCR zur Auswahl des nächsten Befehles aus dem Befehlspuffer IB die Länge DIL des ausgewählten und für die Dekodierung bereitstehenden Befehls vom Füllstand im Register IBF subtrahiert, indem das Komplement $\overline{DIL}$ vom Addierer ADD1 unter Berücksichtigung des vom NAND-Glied NAND gelieferten Eingangsübertrages CI = 1 addiert wird, weil dann die Signale RDI bzw. RP unwirksam sind und daher der Auswahlschalter MUX auf den Eingang 1 für die Längenangabe $\overline{DIL}$ umgeschaltet ist. Solange der Füllstand im Register IBF einen gegenüber dem Längenwert DIL größeren Wert aufweist, ergibt sich ein Ausgangsübertrag CO, der das Steuerelement DECEN setzt und damit das Signal $\overline{DECWAIT}$ = 1 liefert.

Dabei ist unterstellt, daß Änderungen des Inhaltes des im Registers IBF beim Nachladen immer zu Beginn eines Zyklus mit Takt $T_B$ und bei Entnahme immer zur Mitte eines Maschinenzyklusses mit $T_M$ entsprechend der Ableitung des Signals DEC' rückflankengesteuert erfolgen und daß der Ausgangsübertrag CO jeweils mit den Vorderflanken von an die Takte $T_B$, $T_M$ anschließenden Folgetakten $T_{B+1}$ bzw. $T_{M+1}$ in das Steuerelement DECEN übernommen wird, während die Voreinstellung durch das NAND-Glied NAND mit einem den Takt $T_B$ überdauernden verlängerten Takt $T_{EL}$ erfolgt. Im Falle eines Cache-Miss verhindert das Signal $\overline{CWAIT}$ = 0 am UND-Glied U41 eine Änderung des Füllstandes im Register IBF.

Zurückgesetzt wird das Steuerelement DECEN und der Inhalt des Registers IBF durch das Signal RDECEN immer dann, wenn ein neuer Programmlauf beginnt oder eine Programmverzweigung infolge eines erfüllten Sprungbefehles auszuführen ist. Ersteres wird von der Mikroprogrammsteuerung µPST der Befehlsausführungseinheit EXU mit dem Signal RESIB gemeldet, während eine Programmverzweigung von der Programmverzweigungskontrolle BR-CTL, die im unteren Teil von Figur 4 dargestellt ist, signalisiert wird. Dazu werden in bekannter Weise die Inhalte der Register EXIR, ECCO und GR sowie die Anzeige CC der ausgeführten Befehle durch die Einrichtung BCR fortlaufend überwacht und anhand des UND-Gliedes U42 festgestellt, ob entsprechend dem Signal BRINST = 1 ein Sprungbefehl vorliegt und entsprechend dem Signal CONTRUE = 1 die Sprungbedingung erfüllt ist, so daß nach Aufbereitung des Sprungbefehles mit dem Signal TRADON das eine Programmverzweigung anzeigende Steuerelement BRA gesetzt und das Signal BRACT erzeugt wird. Während des nachfolgenden ersten Ausführungszyklusses (Signal FIREXC = 1) des Sprungbefehles wird dann über das UND-Glied U43 ebenso wie mit dem Signal RESIB über das ODER-Glied OR41 und das nachfolgende UND-Glied U44 das Rücksetzsignal RDECEN ausgelöst.

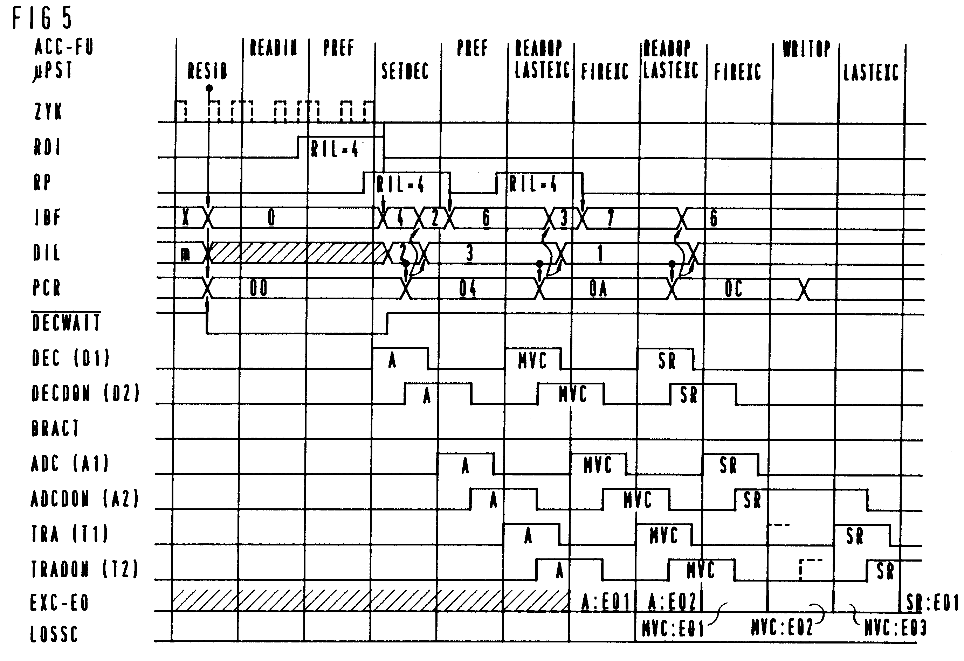

Das Ablaufdiagramm von Figur 5 zeigt den Anlauf eines Programms mit der Befehlsfolge A, MVC und SR. Einzelheiten über Aufbau und Funktion dieser und der den weiteren Ablaufdiagrammen zugrundegelegten Befehle ergeben sich z.B. aus der Siemens-Druckschrift D15/5104-04, Zentraleinheiten Siemens-System 7.500 - Beschreibung und Befehlsliste. Das Ablaufdiagramm ist analog dem von Figur 3 aufgebaut und entsprechend der Zeile ZYK in die einzelnen Maschinenzyklen mit den angedeuteten wichtigsten Takten $T_B$, $T_M$ und $T_E$ unterteilt. Oberhalb der Zeile ZYK kennzeichnet die Zeile ACC-FU die von der Zugriffssteuerung ACC-CTL der Befehlsaufbereitungseinheit PLU ausgelösten Zugriffe, nämlich READIN für das jeweils erstmalige Lesen von Befehlen, PREF für das vorauseilende Befehlslesen zum Nachladen des Befehlspuffers IB sowie READOP für das Operandenlesen und WRITOP für das Operandenschreiben. Die darunter folgende Zeile µPST gibt die von der Mikroprogrammsteuerung µPST gelieferten Steuersignale wieder, die - wie bereits aus Figur 3 ersichtlich - jeweils mit dem Endetakt $T_E$ des Vorläuferzyklus wirksam werden. Die nächsten Zeilen RDI, RP, IBF und DIL beziehen sich entsprechend Figur 4 auf die den Füllzustand des Befehlspuffers IB beeinflussenden Signale, wobei die eingetragenen Ziffern sich auf die Anzahl der Halbworte mit je zwei Byte beziehen, während die Zahlenangaben beim Befehlszähler PCR den Wert des letzten Adressenbytes der jeweils gültigen Befehlsadresse in hexadezimaler Darstellung wiedergeben. Die Zeilen RDI und RP beziehen sich auf den Signalverlauf von entsprechenden Merkern der Zugriffssteuerung ACC-CTL, die aufgrund der Befehle READIN bzw. PREF für das Laden von Befehlsdaten in den Befehlspuffer IB beim Speicherzugriff gesetzt und beim Anliefern der Daten wieder zurückgesetzt werden. Während der Befehl READIN das jeweils erstmalige Lesen von Befehlsdaten nach einem Anlauf oder einer Programmverzweigung kennzeichnet, wird der Befehl PREF immer dann ausgelöst, wenn die Anzahl der im Befehlspuffer verfügbaren Halbwörter bei einer Gesamtkapazität von beispielsweise acht Halbwörtern den Wert 4 erreicht oder unterschreitet, also eine der beiden Befehlspufferhälften frei ist. Die übrigen Zeilen betreffen wie bei Figur 3 die Ausgangssignale der Steuerelemente von Figur 2, wobei die Signale $\overline{\text{DECWAIT}}$ und BRACT eingefügt sind.

Der Anlauf wird jeweils durch eine vorgegebene Zyklenfolge gesteuert, die mit dem Signal RESIB gestartet und mit dem Signal LASTEXC endet, wenn der erste Befehl des Programms aufbereitet zur Übergabe an die Befehlsausführungseinheit EXU bereitsteht. Im vorliegenden Fall sind es insgesamt sechs Zyklen, wobei der zweite und dritte Zyklus zum Befehlslesen von insgesamt acht Halbwörtern dient und mit dem Signal SETDEC im vierten Zyklus die Aufnahme der Dekodierung eines bereitgestellten Befehls mit Setzen des Steuerelementes D1 in der Fließbandsteuerung von Figur 2 zeitlich und logisch festgelegt ist.

Mit dem Signal RESIB im ersten Zyklus wird folglich der Inhalt des Registers IBF auf "O" gesetzt, die vom Ausrichter IBAL gelieferte Längenangabe DIL ungültig und am Befehlszähler PCR die neue Anfangsadresse wirksam. Letztere ist im vorliegenden Fall "OO" für die beiden niederwertigsten Bytes. Außerdem wird, wie anhand von Figur 4 bereits beschrieben, das Signal $\overline{\text{DECWAIT}}$ = 0 wirksam, das einen vorzeitigen Abschluß der Dekodierphase für den ersten Befehl des neuen Programms vorerst verhindert.

Entsprechend dem Laden der ersten vier Halbwörter der neuen Programmbefehlsfolge erhöht sich der Inhalt des Registers IBF auf den Wert 4. Außerdem steht mit kurzem Verzug die Länge DIL des durch den Befehlszähler PCR ausgewählten ersten Befehls am Ausgang des Ausrichters IBAL zur Verfügung, so daß mit Abklingen des Taktes $T_{EL}$ in Figur 4 die Länge DIL des ersten Befehls mit dem Inhalt des Registers IBF verglichen werden kann, wobei der Vergleichsaddierer einen Ausgangsübertrag CO = 1 liefert. Das Steuerelement DECEN wird daher gesetzt und damit das Signal $\overline{\text{DECWAIT}}$ = 1 rechtzeitig im vierten Zyklus wirksam, so daß die im selben Zyklus mit dem Signal SETDEC eingeleitete Dekodierphase (DEC = 1) des ersten Befehls A mit Setzen des Steuerelementes D2 für das Signal DECDON als abgeschlossen gekennzeichnet werden kann.

Mit dem von den Signalen DEC = 1 und $\overline{\text{DECWAIT}}$ = 1 abgeleiteten Signal DEC' = 1 kann daher der Befehlszähler PCR auf den nächsten Befehl mit der Restadresse "04" umgeschaltet und das vom Vergleichsaddierer ADD1 bereits gelieferte Ergebnis als neuer Füllstandswert in das Register IBF übernommen werden. Von den ursprünglichen vier Halbwörtern stehen für den zweiten Befehl MVC nur zwei Halbwörter zur Verfügung. Da dieser Befehl aber eine Länge von drei Halbwörtern hat, wird unabhängig vom laufenden Nachladen entsprechend RP = 1, wodurch der Füllstand weiter auf den ausreichenden Wert "6" erhöht wird, ein neuer Nachladezugriff PREF für den nächsten Zyklus ausgelöst, da mit dem nächsten Befehl MVC der Länge von drei Halbwörtern eine der Befehlspufferhälften wieder frei würde.

Unterstellt man, daß die zugrundegelegte Befehlsfolge A, MVC und SR nicht zu Registerkonflikten führt, ergibt sich der aus dem Ablaufdiagramm von Figur 5 ersichtliche Durchlauf durch die einzelnen Verarbeitungsphasen, ohne daß sich ein Verlustzyklus für die Befehlsausführungseinheit EXU ergibt. Lediglich das Auftreten des Signals TRA für den Befehls SR und damit die Rücknahme des Signals ADCDON verzögert sich, weil der Vorgängerbefehl MVC drei statt zwei Ausführungszyklen MVC:EO1 bis MVC:EO3 benötigt und das Signal LASTEXC um einen Zyklus verzögert ausgelöst wird.

Beim Ablaufdiagramm von Figur 5 ist unterstellt, daß das Lesen von Befehlen immer bis zur Blockgrenze erfolgt, wobei ein Block z.B. 64 Bytes umfaßt und dementsprechend die Blockgrenzen bei hexidezimaler Zählung dem Wert "OO", "40", "80" und "CO" des letzten Adressenbytes entsprechen. Mit Beginn einer Befehlsfolge beim Wert "OO" können daher mit den Lesebefehlen READIN und PREF zunächst immer Befehlsportionen mit der Länge RIL = 4 Halbwörter in den Befehlspuffer IB geladen werden. Beginnt dagegen eine neue Befehlsfolge mit einer Adresse nahe einer Blockgrenze oder nähert sie sich einer Blockgrenze, dann besteht die Gefahr, daß schließlich eine zu lesende Befehlsportion weniger als vier Halbwörter umfaßt und daher ein zu dekodierender Befehl gegebenenfalls nicht vollständig ist.

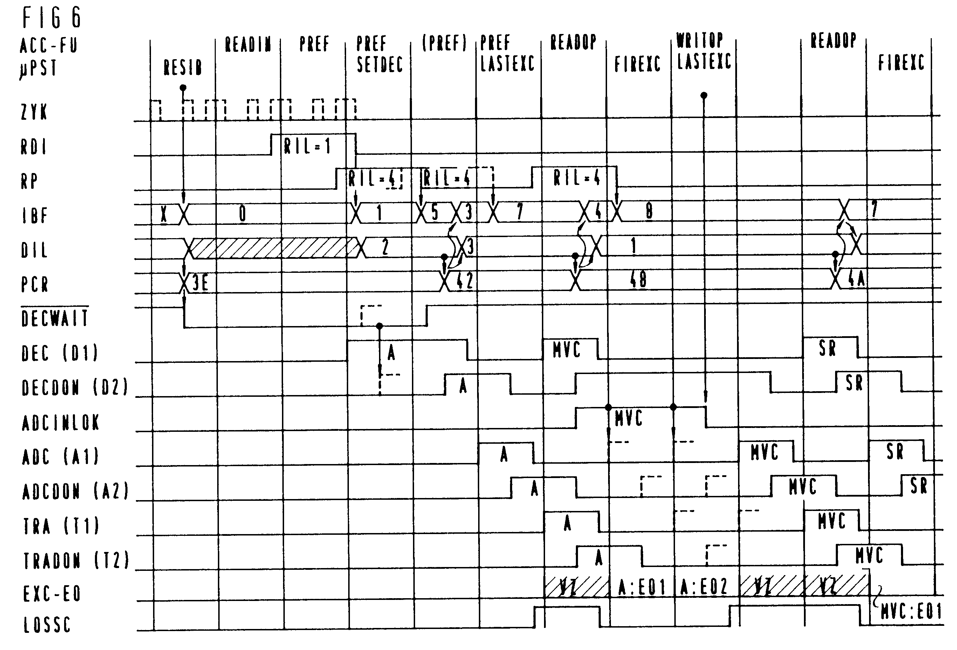

Das Ablaufdiagramm von Figur 6 zeigt im Gegensatz zu dem von Figur 5 einen solchen Fall beim Anlauf für dieselbe Befehlsfolge A, MVC und SR, deren Beginn nun durch den Wert "3E" der letzten beiden Befehlsadressenbytes festgelegt ist. Nach dem Rücksetzen mit dem Signal RESIB kann daher mit dem Lesezugriff READIN nur eine Befehlsportion entsprechend der Länge RIL = 1 gelesen werden. Da der vollständige erste Befehl A aber zwei Halbwörter umfaßt, bleibt das Signal $\overline{\text{DECWAIT}}$ = 0 im vierten Anlaufzyklus bestehen, so daß die Signale DECDON und DEC' verzögert werden und das Steuerelement D1 für das Signal DEC gesetzt bleibt, bis einen Zyklus später mit der zweiten gelesenen Befehlsportion der Befehlspuffer IB ausreichend gefüllt ist. Entsprechend verzögert sich das Setzen des Steuerelementes D2 für das Signals DECDON und damit die Weiterleitung des Befehls A abhängig von den Steuerelementen A1, A2, T1 und T2. Dies führt dazu, daß mit Erreichen des letzten Anlaufzyklusses zwar das Signal LASTEXC ausgelöst wird, das Signal TRADON aber noch nicht vorliegt. Wegen des Fehlens des Signals ADCDON bleibt daher das UND-Glied U1 gesperrt und das Signal LASTEXC ohne Auswirkung auf das Setzen des Steuerelementes D1. Dagegen wird das UND-Glied U8 am Eingang des Steuerelementes LOSS aufgesteuert und dieses Steuerelement gesetzt, das das Setzen des Steuerelementes D1 unabhängig vom Signal LASTEXC ermöglicht, wenn nach Konfliktbereinigung das Signal ADCDON = 1 vorliegt. Bei dem nachfolgenden Signal TRADON wird das Steuerelement LOSS dann wieder zurückgesetzt. Die Folge ist ein Verlustzyklus VZ für die Befehlsausführungseinheit EXU.

Wie aus der Gegenüberstellung der Ablaufdiagramme von Figur 5 und Figur 6 ersichtlich ist, kann mit Einleiten einer Dekodierphase ein zunächst nicht bereitstehender zu dekodierender Befehl noch rechtzeitig in den Befehlspuffer IB übernommen werden, so daß die vorgegebene Zeit für das Dekodieren bis zum Auslösen des Signals DECDON in der Regel ausreicht und geprüft werden kann, ob der Befehl auch vollständig ist. Verzögert sich dagegen die Befehlsbereitstellung, weil z.B. entsprechend dem Signal $\overline{CWAIT}$ = 0 der bereitzustellende Befehl im Cache nicht vorhanden ist oder weil der bereitstehende Befehl nicht vollständig ist, dann besteht mit $\overline{DECWAIT}$ = 0 bis zum letzten Moment vor der normalerweise vorgegebenen Beendigung der Dekodierphase die Möglichkeit, das Wirksamwerden der den erfolgreichen Abschluß der Dekodierphase kennzeichnenden Signale DEC' und DECDON zu verhindern.

Im Zusammenhang mit dem Laden von Befehlen in den Befehlspuffer IB sei zusätzlich auf eine weitere Besonderheit hingewiesen: Die das Lesen oder das Nachladen einer Befehlsportion kennzeichnenden Merker RDI bzw. RP sind jeweils zweistufig ausgebildet, d.h. die erste Stufe wird jeweils - wie gezeigt - z.B. mit einem Takt $T_E$ gesetzt und mit einem nachfolgenden Takt $T_M$ zurückgesetzt, der gleichzeitig die zweite Stufe setzt, falls die erste Stufe gesetzt war und keine Sperrbedingung für das Setzen der zweiten Stufe vorliegt. Diese zweite Stufe wird dann bei Eintreffen der Befehlsportion mit dem Ende von Takt $T_B$ zurückgesetzt. Auch kann die erste Stufe des Merkers RP bereits wieder gesetzt werden, während die zweite Stufe noch gesetzt ist, was im vierten und fünften Anlaufzyklus von Figur 6 gestrichelt angedeutet ist, so daß Nachladezugriffe PREF in aufeinanderfolgenden Zyklen ausgeführt werden können.

Andererseits werden vorzugsweise Nachladeanforderungen mit dem Befehl PREF im Gefolge normalerweise immer dann bereits vorsorglich ausgelöst, wenn wegen einer Blockgrenzenüberschreitung keine vollständige Befehlsportion geladen werden kann (PREF im vierten Anlaufzyklus von Figur 6) oder die Bedingung IBF - DIL ≤ 4 gilt, also eine der Befehlspufferhälften leer ist. Bei einem gleichzeitig laufenden Nachladevorgang führt die letztere Bedingung aber nur zu einer erneuten Nachladeanforderung, wenn auch nach dem Nachladen die Bedingung noch erfüllt bleibt. Bei Figur 6 würde das zu einem Nachladebefehl PREF im fünften Zyklus wegen IBF (= 1) - DIL (= 2) = - 1 am Ende des vierten Zyklus führen. Da aber bereits zwei Nachladeanforderungen wirksam sind und danach der Befehlspuffer IB entsprechend IBF (1 + 4 + 4 = 9) - DIL (= 2) = 7 ausreichend gefüllt ist, kommt dieser Nachladeanforderung nicht zur Ausführung. Andererseits wird entsprechend IBF (3 + 4 = 7) - DIL (= 3) = 4 am Ende des fünften Zyklus eine erneute Nachladeanforderung mit dem Nachladebefehl PREF im sechsten Zyklus ausgelöst, da nach Dekodieren des Befehls MVC der Befehlspuffer IB entsprechend geleert ist und die neue Befehlsportion vollständig aufnehmen kann.

Die im weiteren Verlauf des Ablaufdiagramms von Figur 6 sich ergebende weitere Verzögerung für die Aufbereitung des Befehls MVC ist durch einen Registerkonflikt zwischen den Befehlen A und MVC bedingt, was später erläutert wird.

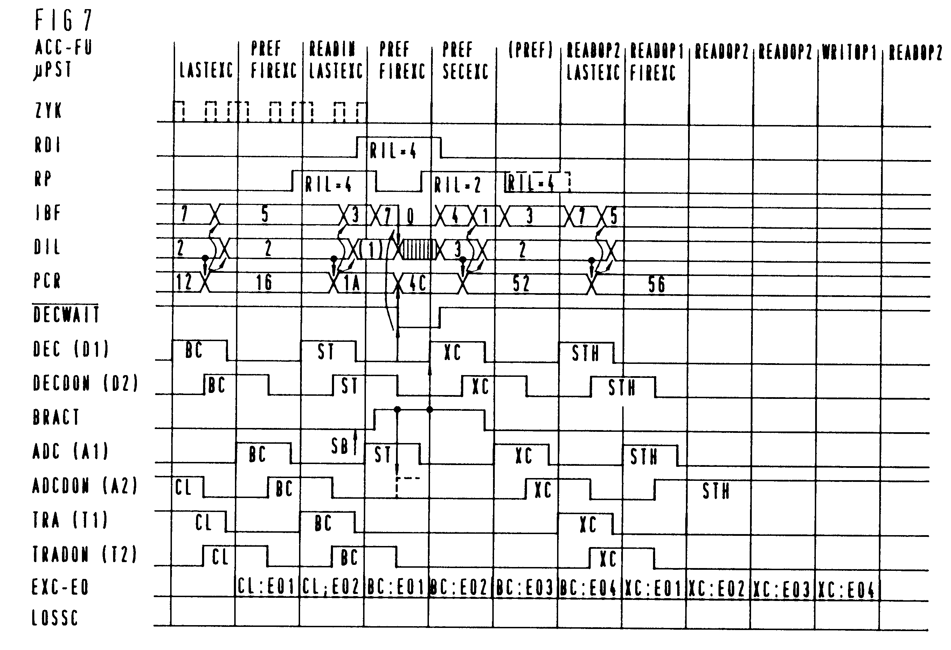

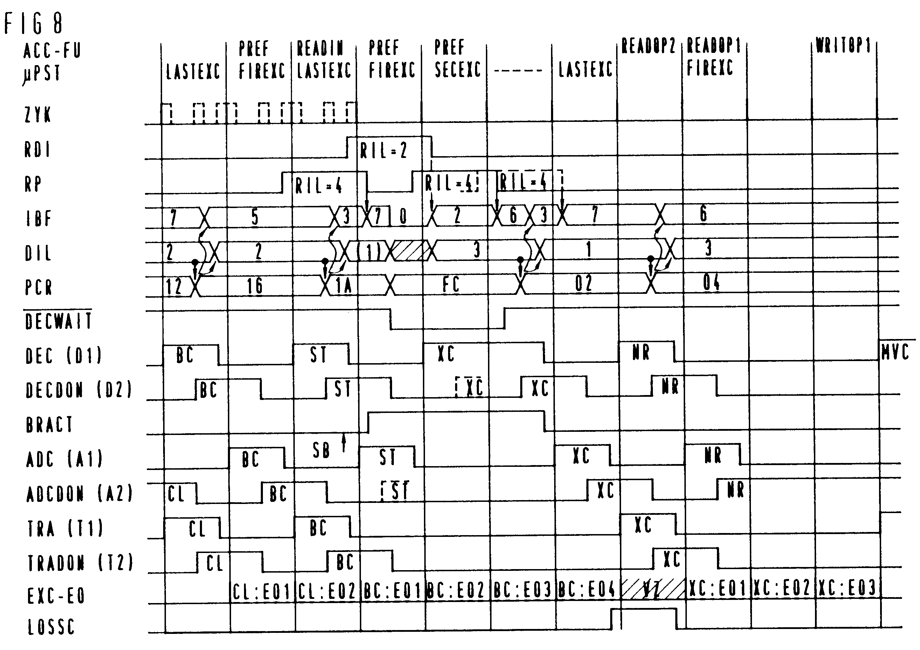

Ähnliche Bedingungen wie beim Anlauf eines Programms entsprechend Figur 5 oder Figur 6 ergeben sich bei einer Programmverzweigung infolge eines Sprungbefehles mit erfüllter Sprungbedingung. Entsprechende Ablaufdiagramme zeigen Figur 7 und Figur 8, die mit der Dekodierung eines Sprungbefehls BC im Rahmen einer Befehlsfolge CL - BC - ST beginnen, wobei nach dem Sprungbefehl BC auf die Folgebefehlskette XC - STH bzw. XC - NR umzusteuern ist. Nach dem Dekodieren des Sprungbefehls BC im ersten Zyklus wird mit der Umschaltung des Befehlszählers PCR die Nachladebedingung IBF (= 5) - DIL (= 2) = 3 ≤ 4 erfüllt und mit dem daraus resultierenden Nachladezugriff PREF im zweiten Zyklus der Merker RP gesetzt, wodurch der Inhalt des Registers IBF im vierten Zyklus auf den Wert 7 erhöht wird. Andererseits wird nach dem Dekodieren und der Adreßrechnung für die mögliche Programmverzweigung mit dem Befehl READIN im dritten Zyklus der Lesevorgang für die Befehle der Verzweigungsrichtung eingeleitet. Im vorliegenden Fall haben die letzten beiden Adressenbytes den Wert "4C", so daß eine Befehlsportion von vier Halbwörtern entsprechend RIL = 4 gelesen werden kann, während für das erste Nachladen mit PREF im darauffolgenden Zyklus nur noch zwei Halbwörter wegen Einphasens auf die Doppelwortgrenze hinzukommen, was vorsorglich zu einer weiteren Nachladeanforderung mit PREF im fünften Zyklus führt.

Parallel dazu wird, da die Sprungbedingung noch nicht bekannt ist, mit der Dekodierung des linearen Folgebefehls ST der lineare Programmverlauf zunächst fortgesetzt und der Sprungbefehl BC zur Mitte des letzten Verarbeitungszyklusses CL:EO2 des Vorgängerbefehls CL in die Register EX-REG der Befehlsausführungseinheit EXU übernommen, so daß die Einrichtung BCR (Figur 4) das Signal BRINST und infolge der erfüllten Sprungbedingung SB das Signal CONTRUE auslöst. Beide Signale führen dann mit dem Signal TRADON für den Befehl BC über das UND-Glied U42 zum Setzen des Steuerelementes BRA und damit zum Signal BRACT, das anschliessend mit dem Signal FIREX für den ersten Verarbeitungszyklus BC: EO1 des Sprungbefehles über das UND-Glied U43 sowie das ODER-Glied OR41 und das UND-Glied U44 das Rücksetzsignal RDECEN für das Steuerelement DECEN erzeugt. Damit ist das Signal $\overline{\text{DECWAIT}}$ = 0 wirksam. Außerdem wird das Register IBF zurückgesetzt und der Befehlszähler PCR auf die neue Anfangsadresse "...4C" umgeladen. Das Signal BRACT verhindert außerdem am UND-Glied U6 (Figur 2), daß mit Bezug auf den linearen Folgebefehl ST das Steuerelement A2 gesetzt wird. Stattdessen wird über die UND/ODER-Kombination UOR1 das Steuerelement A1 zurückgesetzt und damit die weitere Aufbereitung des Befehls ST abgebrochen.

Zusammen mit dem nachfolgend eintreffenden und die Durchführung des zweiten Verarbeitungszyklus BC: EO2 des Sprungbefehles BC kennzeichnenden Signal SECEXC wird dann über das UND-Glied U5 und das ODER-Glied OR2 die Dekodierung des inzwischen mit Lesen der ersten Befehlsportion in den Befehlspuffer IB geladenen ersten, nichtlinearen Folgebefehls freigegeben. Außerdem wird das Signal $\overline{\text{DECWAIT}}$ = 1, da der Befehl vollständig ist, rechtzeitig wieder wirksam, so daß die Dekodierphase mit Setzen des Steuerelementes D2 für das Signal DECDON noch im selben Zyklus zur vorgesehenen Zeit abgeschlossen werden kann. Damit wird auch das Steuerelement BRA (Figur 4) über das UND-Glied U45 zurückgesetzt und mit dem Signal BRACT = 0 das UND-Glied U6 (Figur 2) freigegeben, so daß der nichtlineare Folgebefehl XC zügig ohne Unterbrechung aufbereitet und verarbeitet werden kann.

Bei XC ist unterstellt, daß die Operandenlänge mehr als 24 Bytes umfaßt, so daß bei einer Verarbeitungslänge von jeweils 8 Bytes ein mehrmaliges Lesen beider Operanden (READOP) und Rückschreiben (WRITOP) entsprechend der ersten Zeile ACC-FU notwendig ist. Infolgedessen wird nach der Adreßrechnung für den Folgebefehl STH die weitere Aufbereitung gestoppt, bis der letzte Verarbeitungszyklus des Befehls XC zur Ausführung gelangt und das Signal LASTEXC wirksam wird.

Das Ablaufdiagramm von Figur 8 unterscheidet sich gegenüber dem von Figur 7 im wesentlichen dadurch, daß die Startadresse für den neuen Programmzweig mit dem Wert "FC" der beiden letzten Befehlsadressenbytes zu nah an der Blockgrenze liegt und zunächst nur eine Befehlsportion von zwei Halbwörtern entsprechend RIL = 2 gelesen werden kann. Auf das erstmalige Befehlslesen mit READIN folgt daher ein zweimaliges Nachlesen mit PREF im vierten und fünften Zyklus.

Wiederum wird mit den Signalen BRACT = 1 und SECEXC = 1 im fünften Zyklus die Dekodierung für den ersten nichtlinearen Folgebefehl XC freigegeben. Da aber der Befehl nicht vollständig ist, bleibt das Signal $\overline{\text{DECWAIT}}$ = 0 einen Zyklus länger bestehen und verzögert so das Setzen des Steuerelementes D2 für das Signal DECDON mit der Folge, daß das Fließband nicht weiter arbeiten kann und ein Verlustzyklus VZ für die Befehlsausführungseinheit EXU entsteht.

Der weitere Unterschied, daß die Operandenlänge für den Befehl XC weniger als 8 Bytes umfaßt, was nur ein einmaliges Lesen mit READOP2 und READOP1 sowie ein einmaliges Schreiben mit WRITOP1 gemäß der Zeile μIN zur Folge hat, ist dagegen nicht von Bedeutung.

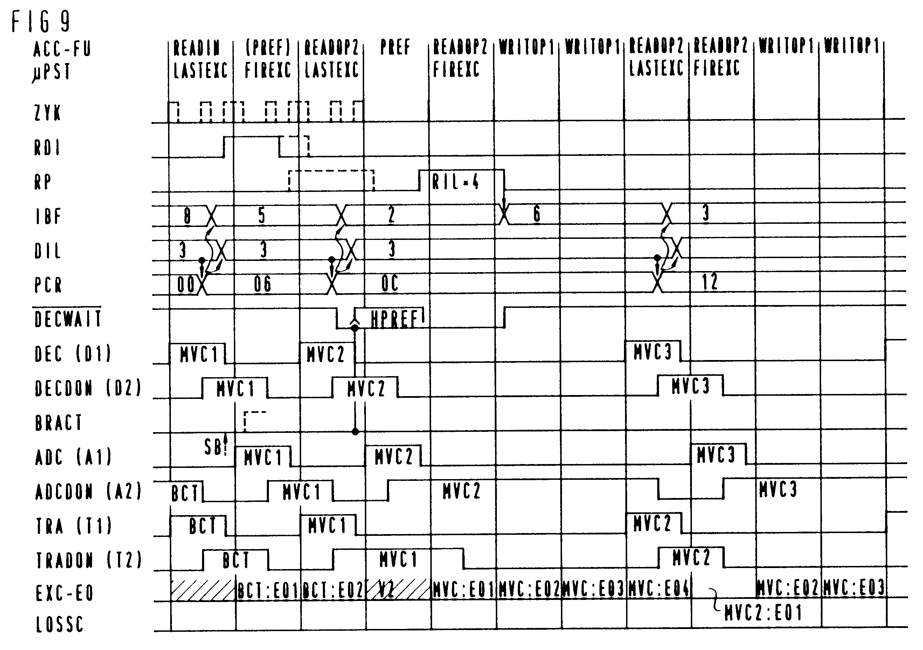

Das Ablaufdiagramm von Figur 9 bezieht sich auf den Sonderfall, daß einem Sprungbefehl BCT mit nicht erfüllter Sprungbedingung SB ein Befehl MVC1 mit einer Operandenlänge von mehr als 8 Bytes folgt, was zu einem "Austrocknen" des Befehlspuffers IB führen könnte, weil kein Zyklus für ein Befehlsnachlesen zur Verfügung steht.

Zu Beginn des Ablaufdiagramms ist die erste Adreßrechnung für den Sprungbefehl BCT abgeschlossen und eine Leseanforderung entsprechend dem Lesebefehl READIN während des letzten Verarbeitungszyklus des Vorgängerbefehls wirksam, während der lineare Folgebefehl MVC1 zur Dekodierung ansteht. Gegen Ende dieses ersten gezeigten Zyklus ergibt sich, daß die Sprungbedingung SB nicht erfüllt ist, so daß das Signal BRACT = 1 ausbleibt. Da also linear im Programm fortzufahren ist, wird der eingeleitete Lesevorgang abgebrochen, indem beim Rücksetzen der ersten Stufe des Merkers RDI die zweite Stufe nicht gesetzt wird. Auch wird der mit dem Befehl READIN gekoppelte Nachladebefehl PREF nicht ausgeführt, indem der Merker RP nicht gesetzt wird. Der Befehlspuffer IB wird daher gemäß der Angabe zum Register IBF fortschreitend geleert, da ein rechtzeitiges Nachladen am Ende des ersten Zyklus wegen IBF ( = 5) - DIL ( = 3) = 2 ≤ 4 entsprechend (PREF) im zweiten Zyklus wegen der erfolgten Umschaltung auf die Startadresse für die mögliche Programmverzweigung nicht möglich ist. Mit dem Dekodieren des zweiten linearen Folgebefehls MVC2 und Umschalten des Befehlszählers PCR wird daher die Beziehung IBF (= 2) - DIL (= 3) negativ und damit erkennbar, daß der nächstfolgende Befehl nicht vollständig ist. Das führt zum Signal $\overline{\text{DECWAIT}}$ = 0 und in Verbindung mit dem Signal BRACT = 0 bei Operandenlängen mit mehr als 8 Bytes zwangsweise zum Einschub eines Nachladezyklus durch das Signal HPREF, was einen Verlustzyklus VZ für die Befehlsausführungseinheit EXU als vierten Maschinenzyklus zur Folge hat.

Bei Befehlen MVC mit einer Operandenlänge von mehr als 8 Bytes wird nämlich der erste Verarbeitungszyklus des Befehls, z.B. MVC: EO1 des Befehls MVC1, für ein weiteres Lesen des Operanden benötigt, um diesen zu vervollständigen. Dies kann aber nicht gleichzeitig mit dem Lesen eines Befehls ausgeführt werden, so daß der Beginn der Befehlsausführung des Befehls MVC1 verzögert werden muß. Das Steuerelement T2 für das Signal TRADON des Befehls MVC1 kann daher erst mit dem einen Zyklus später eintreffenden Signal FIREXC zurückgesetzt werden. Außerdem bleibt das Steuerelement A2 für das Signal ADCDON des Befehls MVC2 gesetzt und damit die weitere Aufbereitung von Befehlen gesperrt, bis das Signal LASTEXC beim letzten Bearbeitungszyklus des Befehls MVC schließlich wirksam wird.

Eine Operandenlänge von weniger als 8 Bytes beim Befehl MVC1 würde dagegen keinen Verlustzyklus VZ zur Folge haben, da der Lesebefehl im Operanden OP2 bereits im letzten Verarbeitungszyklus des Sprungbefehles BCT bearbeitet wird und der Operand erst im zweiten darauffolgenden Zyklus geschrieben werden könnte, so daß der erste Verarbeitungszyklus des Befehls MVC1 für ein Befehlslesen zur Verfügung steht.

Wie aus den bisher erläuterten Beispielen ersichtlich ist, wird die Aufnahme der Aufbereitung eines Befehls mit seiner Dekodierung durch Setzen des Steuerelementes D1 beim Anlauf durch das Signal SETDEC der Anlaufroutine gesteuert. Im weiteren Verlauf der Befehlsverarbeitung erfolgt die Synchronisierung der Aufbereitung mit der Verarbeitung durch die Befehlsausführungseinheit EXU anhand des Signals LASTEXC für den letzten Verarbeitungszyklus eines jeden Befehls bzw. im Falle von Verzögerungen der Aufbereitung durch das Steuerelement LOSS, wobei diese Signale nicht nur auf das Steuerelement D1 einwirken, sondern zusätzlich auch auf das Steuerlement T1, während bei einem erfüllten Sprungbefehl entsprechend dem Signal BRACT = 1 die Fortschreitung der Aufbereitung vom Signal SECEXC für die Kennzeichnung des zweiten Verarbeitungszyklus des Sprungbefehles abhängig ist.

Steht für eine eingeleitete Dekodierung kein vollständiger Befehl zur Verfügung, dann verlängert das Signal $\overline{\text{DECWAIT}}$ = 0 rechtzeitig die Dekodierphase, indem das Abschlußsignal DECDON verhindert wird.

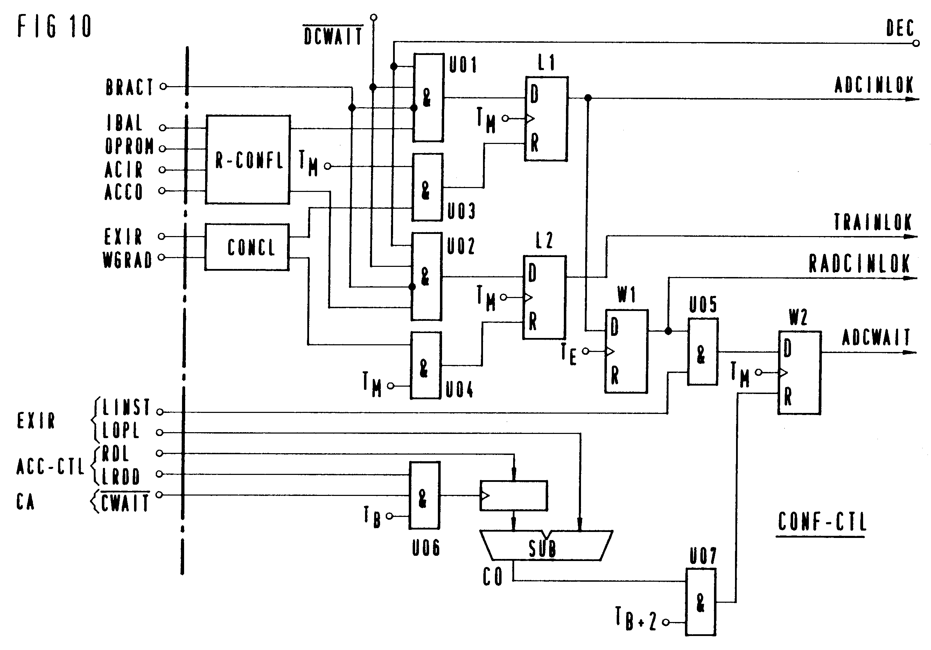

In ähnlicher Weise greifen die im Falle eines Registerkonfliktes erzeugten Steuersignale ADCINLOK und TRAINLOK als Bremssignale in den Aufbereitungsablauf für die Fließbandsteuerung von Figur 2 ein. Figur 10 zeigt ein Blockschaltbild zur Ableitung dieser Signale durch die Konfliktüberwachungssteuerung CONF-CTL von Figur 1.

Die eigentliche Registerkonfliktüberwachung erfolgt in an sich bekannter Weise durch die Überwachungseinrichtung R-CONFL, die bei jedem für die Dekodierung bereitgestellten Befehl die vom Ausrichter IBAL und vom Steuerspeicher OPROM gelieferten Angaben mit denen aus den Registern ACIR und ACCO für den Vorgängerbefehl vergleicht. Benötigt der gerade dekodierte Befehl zur Adressenberechnung für den zweiten Operanden ein Register, dessen Inhalt erst nach Ausführung des Vorgängerbefehls zur Verfügung steht, dann wird analog der Bedingung $\overline{\text{DECWAIT}}$ ∧ DEC für das Signal DECDON über das UND-Glied UO1 das Steuerelement L1 mit dem Takt $T_M$ gesetzt und das Steuersignal ADCINLOK erzeugt. Dadurch wird das UND-Glied U4 in Figur 2 gesperrt und das Steuerelement A1 kann nicht gesetzt werden, so daß die Einleitung der ersten Adreßrechnungsphase für den zweiten Operanden verhindert wird. Analoges gilt bezüglich der zweiten Adreßrechnungsphase für den ersten Operanden. In diesem Falle wird über das UND-Glied UO2 das Steuerelement L2 gesetzt und das Signal TRAINLOK erzeugt, so daß das UND-Glied U2 in Figur 2 gesperrt wird und das Steuerelement T1 nicht gesetzt werden kann.

Um jedoch zu verhindern, daß nach einem auszuführenden Sprungbefehl, dessen Sprungbedingung erfüllt ist, ein sich im Registersatz ACPCR/ACIR/ACCO befindender linearer Folgebefehl in Bezug auf den sich in der Decodierphase befindenden nichtlinearen Folgebefehl noch eines der Konfliksignale ADCINLOK oder TRAINLOK auslösen kann, werden die vorgeschalteten UND-Glieder UO1 bzw. UO2 durch das die Verzweigung anzeigende Signal BRACT gesperrt.

Steht nach Ausführung des Vorgängerbefehls der für die Adreßrechnung benötigte Registerinhalt zur Verfügung, was in an sich bekannter Weise anhand der Angaben im Register EXIR und der Schreibadrese WGRAD für das, das Ergebnis aufnehmende Mehrzweckregister GR durch die Einrichtung CONCL überwacht wird, dann wird das jeweils betroffene Steuerelement L1 bzw. L2 über das UND-Glied UO3 bzw. UO4 mit Takt $T_M$ wieder zurückgesetzt.

Die Auswirkung dieser Steuersignale sei wiederum anhand von Ablaufdiagrammen für verschiedene Befehlsfolgen erläutert.

Beim Ablaufdiagramm von Figur 6 mit der Befehlsfolge A, MVC und SR sei beispielsweise angenommen, daß der Befehl MVC für die Berechnung der Adresse des zweiten Operanden den Inhalt eines Registers GR, das das Verknüpfungsergebnis des Befehls A aufnimmt, als Basisadresse benötigt. Dieser Konflikt wird mit der Dekodierung des Befehls MVC erkannt und das Steuersignal ADCINLOK zeitgleich mit dem Signal DECDON erzeugt. Folglich kann mit dem nachfolgenden Takt $T_B$ das Steuerelement A1 noch nicht gesetzt und das Steuerelement D2 für das Signal DECDON nicht zurückgesetzt werden. Die erste Adreßrechnungsphase wird daher verzögert, bis mit dem letzten Verarbeitungszyklus A:EO2 das benötigte Ergebnis zur Verfügung steht. Da während dieses Verarbeitszyklus das Steuerelement T2 für das Signal TRADON zurückgesetzt ist, wird mit dem Signal LASTEXC das Steuerelement LOSS gesetzt, das nach Ausführung der Adreßrechnung mit Setzen des Steuerelementes A2 und damit der Aufhebung der Sperre für das UND-Glied U1 die Dekodierung für den Folgebefehl SR wieder freigibt. Die Folge sind zwei Verlustzyklen VZ nach Ausführung des Befehls A.

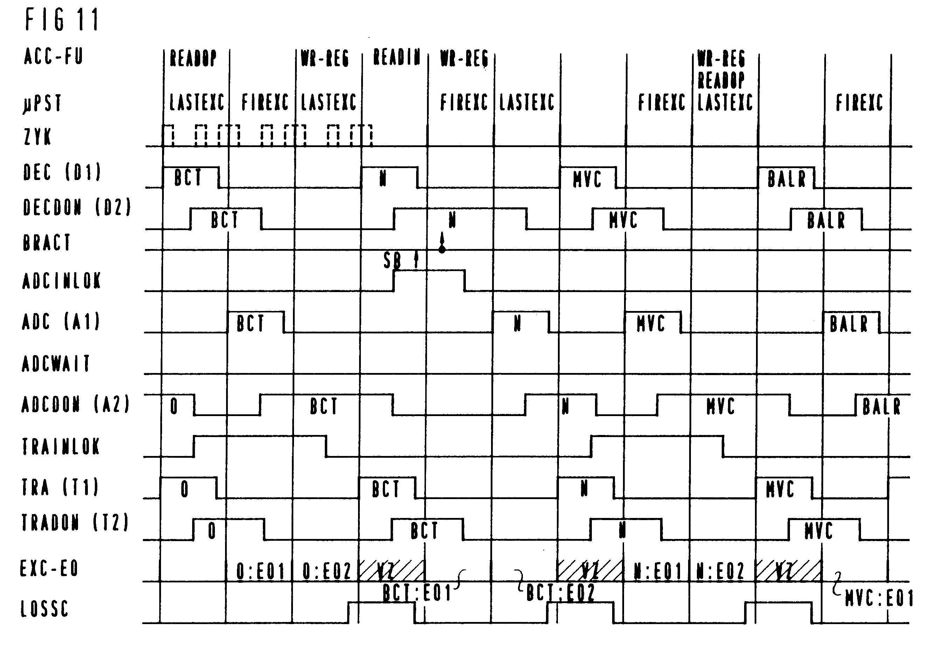

Beim Ablaufdiagramm von Figur 11 sind für die gezeigte Befehlsfolge O, BCT, N, MVC und BALR verschiedene Konflikte unterstellt. So sei z.B. angenommen, daß der durch den Befehl O erst im letzten Verarbeitungszyklus O: E = 2 zur Verfügung stehende Registerinhalt für die Sprungentscheidung des nachfolgenden Befehls BCT maßgebend ist, der gerade dekodiert wird, während die erste Adreßrechnung für den zweiten Operanden des Befehls O abgeschlossen und der Holzyklus für diesen Operanden entsprechend dem Befehl READOP läuft. Infolgedessen wird von der Konfliktüberwachungssteuerung CONF-CTL das Steuersignal TRAINLOK erzeugt.

Für den Befehl BCT kann daher zwar die erste Adreßrechnung für den zweiten Operanden durchgeführt werden, nicht aber die während der zweiten Adreßrechnungsphase durchzuführende Sprungbedingungermittlung anhand des vom Konflikt betroffenen Mehrzweckregisters GR. Die weitere Aufbereitung des Befehls BCT wird infolgedessen durch das Signal TRAINLOK gestoppt, bis im Verlustzyklus nach dem letzten Verarbeitungszyklus O: EO2 des Vorgängerbefehls O die Überprüfung der Sprungbedingung SB erfolgen kann. Da die Sprungbedingung im vorliegenden Fall nicht erfüllt ist, erfolgt keine Programmverzweigung, und die erst durchzuführende weitere Aufbereitung des Befehls BCT in der zweiten Adreßrechnungs- oder Holphase führt zu einem Verlustzyklus VZ für die Verarbeitungseinheit EXU.

Analoges gilt für das Befehlspaar N und MVC, wobei angenommen ist, daß der Befehl MVC für die Berechnung der Adresse des ersten Operanden in der zweiten Adreßrechnungsphase den Inhalt eines Mehrzeckregisters benötigt, der erst mit Ausführung des Befehls N im letzten Verarbeitungszyklus N: EO2 zur Verfügung steht.

Aus den anhand von Figur 6 und Figur 11 erläuterten Beispielen wird ersichtlich, daß das Hemmnissignal ADCINLOK ohne Verlustkompensation, wenn der verursachende Befehl in der letzten EO ins Register schreibt, zwei Verlustzyklen VZ gegenüber nur einem Verlustzyklus beim Hemmnissignal TRAINLOK zur Folge hat, was der Anzahl der nachfolgenden, jeweils noch zu durchlaufenden Aufbereitungsphasen entspricht. In allen diesen Fällen ist das Signal TRADON noch nicht wirksam, wenn das Signal LASTEXC für den letzten Verarbeitungszyklus des Vorgängerbefehls ansteht, so daß das Steuerelement LOSS die weitere Synchronisierung der Aufbereitung mit der Verarbeitung übernimmt.

Die durch die Signale ADCINLOK und TRAINLOK normalerweise verursachten Verluste im Umfang von zwei oder einem Verlustzyklus VZ können abhängig von der jeweiligen Befehlsfolge in unterschiedlichem Umfange auch kompensiert werden. So sei mit Bezug auf das Befehlspaar BCT und N beim Ablaufdiagramm von Figur 11 angenommen, daß der vom Befehl BCT veränderte Inhalt eines Mehrzweckregisters vom Folgebefehl N für die erste Adreßrechnung benötigt und daher mit der Dekodierung des Befehls N das Steuersignal ADCINLOK erzeugt wird. In diesem Falle steht aber der benötigte Registerinhalt schon während des ersten Verarbeitungszyklusses BCT: EO1 zur Verfügung, so daß das Steuersignal ADCINLOK bereits nach einem Verlustzyklus wieder entfällt und die Aufbereitung des Befehls N fortgeführt werden kann.

Auch bei Ladebefehlen, wie L und LH, als Konfliktverursacher können normalerweise auftretende Verlustzyklen teilweise eingespart werden. Durch diese Befehle werden Operanden mit vorgegebener Länge von vier oder zwei Halbwörtern in ein vorgegebenes Mehrzweckregister eingeschrieben. Lädt mar diese Operanden parallel zum Speicherdatenregister in einen gesonderten Operandenpuffer LOP-B, der unmittelbar Zugang zum Adreßrechner AD-ADD hat, dann können die Operandendaten bereits einen Zyklus nach Start des Operandenlesens für die Adreßrechnung zur Verfügung stehen, obwohl sie erst einen Zyklus später vom Speicherdatenregister in das Mehrzweckregister übertragen werden. Das Signal ADCINLOK kann daher bereits im Zyklus vor dem Eintreffen der Operandendaten zurückgesetzt werden, so daß einer von den normalerweise üblichen beiden Verlustzyklen entfällt.

Figur 10 zeigt im unteren Teil eine die Ausführung von Ladebefehlen überwachende Zusatzsteuerung in Verbindung mit der Registerkonfliktüberwachung. Mit dieser Zusatzsteuerung wird überwacht, ob das Register EXIR der Befehlsausführungseinheit EXU einen zur Ausführung anstehenden Ladebefehl mit dem Signal LINST anzeigt. Wird nun der von diesem Ladebefehl durch Laden eines Operanden von der Länge LOPL in ein Mehrzweckregister geänderte Registerinhalt für die erste Adreßrechnung beim Folgebefehl benötigt, dann wird - wie bereits erläutert - mit Abschluß der Dekodierphase des Folgebefehls das Signal ADCINLOK erzeugt. Außerdem wird vorsorglich ein weiteres Steuerelement W 1 gesetzt, so daß nachfolgend über das dadurch freigegebene UND-Glied UO5 bei Vorliegen des Signals LINST ein weiteres Steuerelement W2 für die Erzeugung des Signals ADCWAIT gesetzt werden kann. Während der laufenden Operandenleseoperation für den zweiten Operanden des Ladebefehls liefert die Zugriffssteuerung ACC-CTL des weiteren die Angabe RDL über die tatsächliche Länge des durch den Lesezugriff zur Verfügung stehenden Operanden und das Signal eines weiteren Merkers LRDD, der analog den Merkern RID und RP beim Speicherzugriff gesetzt und bei Lieferung der Daten zurückgesetzt wird. Mit dem Signal LRDD wird abhängig vom Signal $\overline{\text{CWAIT}}$ bei Anlieferung der Operandendaten über das UND-Glied UO6 ein Register REG zur Übernahme der anstehenden Angabe RDL getaktet, dessen Inhalt nachfolgend mit der zu lesenden Operandenlänge LOPL mittels des Subtrahierers SUB verglichen wird. Entspricht das Vergleichsergebnis der Bedingung RDL ≧ LOPL, dann liefert der Subtrahierer einen Übertrag CO als Anzeichen dafür, daß der gewünschte Operand mit einem Zugriff gelesen werden kann und nicht zwei Zugriffe wegen Blockgrenzenüberschreitung erforderlich werden. Dieser Ausgangsübertrag CO setzt daher über das UND-Glied UO7 nachfolgend das Steuerelement W2 wieder zurück.

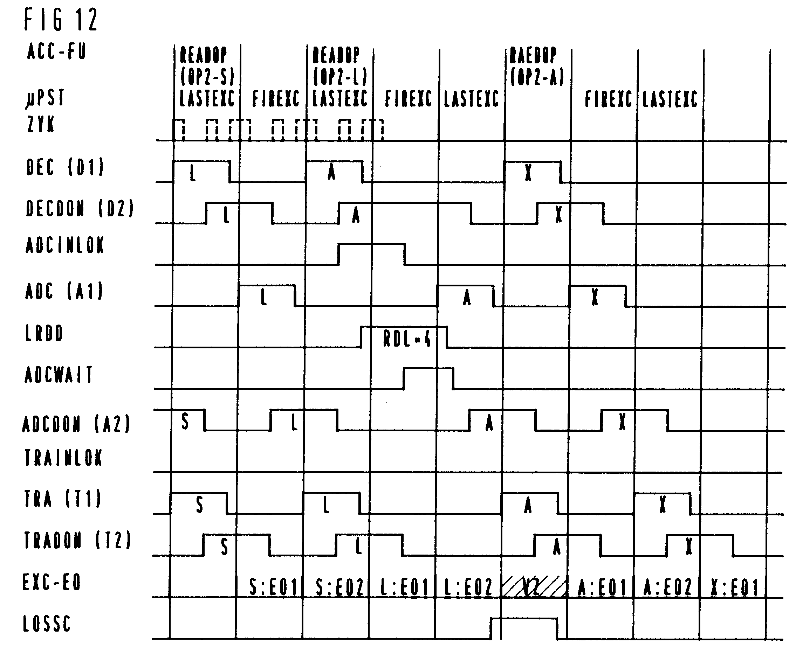

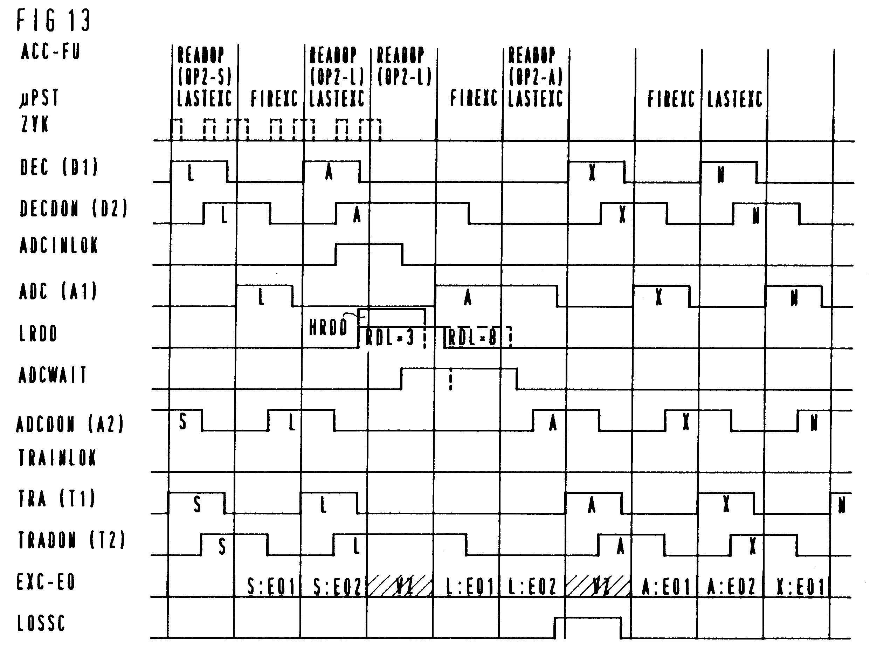

Die Auswirkung der Zusatzsteuerung sei nachfolgend anhand der Ablaufdiagrammevon Figur 12 und Figur 13 näher erläutert: Zu verarbeiten sei jedesmal die Befehlsfolge S, L, A und X, wobei im ersten dargestellten Zyklus für den Befehl S gerade die Operandenholphase läuft, während der Ladebefehl L dekodiert wird. Im dritten Zyklus, dem letzten Verarbeitungszyklus S: EO2 des Befehls S, läuft die Operandenholphase des Befehls L, was in der ersten Zeile ACC-FU durch den Befehl READOP (OP2-L) gekennzeichnet ist. Dies führt gegen Ende des Zyklus mit dem Takt $T_E$ zum Setzen des Merkers LRDD, wobei entsprechend der Angabe RDL = 4 der volle Operand gelesen wird. Außerdem wird wegen des Registerkonflikts das Signal ADCINLOK wirksam und damit die Einleitung der ersten Adreßrechnungsphase für den Folgebefehl A verhindert.

Im nachfolgenden vierten Zyklus, während auf den zu lesenden Operanden gewartet wird, wird daher entsprechend Figur 10 nach Setzen der Steuerelemente W1 und W2 auch das Signal ADCWAIT ausgelöst und das Steuerelement L1 für das Signal ADCINLOK in Erwartung des Operanden wieder zurückgesetzt, so daß mit dem nachfolgenden fünften Zyklus die erste Adreßrechnung für den Befehl A eingeleitet werden kann.

Gleichzeitig mit dem Eintragen der aus dem Speicher gelesenen Operandendaten in den Adreßrechnungspuffer LOP-B erfolgt dann der Längenvergleich zu Beginn des letzten Verarbeitungszyklus L: EO2 des Befehls L. Da der Operand vollständig ist, wird das Steuerelement W2 wieder zurückgesetzt, und das Signal ADCWAIT entfällt. Da letzteres rechtzeitig vor dem normalen Setzen des Steuerelementes T2 erfolgt, wird der Abschluß der Adreßrechnungsphase des Befehls A nicht verzögert, so daß sich letzten Endes nur ein Verlustzyklus VZ statt der üblichen zwei Verlustzyklen ergibt.

Beim Ablaufdiagramm von Figur 13 ist dagegen unterstellt, daß der vom Befehl L benötigte Operand sich über die Blockgrenze erstreckt. Dies wird in bekannter Weise von der Zugriffssteuerung ACC-CTL erkannt und mit der Längenangabe RDL = 3 signalisiert. Danach können beim ersten Lesezugriff lediglich drei der benötigten vier Operandenbytes gelesen werden, so daß für die Vervollständigung des Operanden ein zweiter Lesezugriff erforderlich wird. Dieser wird durch das Signal HRDD ausgelöst, das zugleich einen zusätzlichen Verlustzyklus VZ während des vierten Maschinenzyklus bewirkt. Das Signal ADCWAIT bleibt daher im Gegensatz z.B. von Figur 12 einen Zyklus länger wirksam, so daß der Abschluß der ersten Adressenrechnung für den Befehl A entsprechend verzögert wird.

**Patentansprüche**

1. Befehlsverarbeitungseinheit für nach dem Fließbandprinzip arbeitende Datenverarbeitungsanlagen, bestehend aus einer Befehlsaufbereitungseinheit (PLU) mit mehreren in Serie geschalteten Aufbereitungsstufen für die Befehlsbereitstellung, die Befehlsdekodierung, die Berechnung der Operandenadressen und die Operandenbereitstellung und einer nachfolgenden Befehlsausführungseinheit (EXU), wobei die jeweils bereitgestellten Befehle nacheinander den einzelnen, überlappt arbeitenden Aufbereitungsstufen und anschließend der Befehlsausführungseinheit zugeführt werden, wenn die jeweilige Aufbereitungsstufe ihre Arbeit abgeschlossen hat und die jeweils nächste Stufe zur Übernahme bereit ist, **dadurch gekennzeichnet,**

- daß beginnend mit der Decodierstufe jeder Aufbereitungsstufe eine Freigabephase (z.B. DEC bzw. ADC bzw. TRA) für die Aufbereitung und eine nachfolgende Umschaltephase (z.B. DECDON bzw. ADCDON bzw. TRADON) zugeordnet ist, wobei die Freigabephase (z.B. DEC) jeweils das Umschalten auf die zugehörige Umschaltephase (DECDON) und diese wiederum das Abschalten der steuernden Freigabephase (DEC) sowie das Einschalten der Freigabephase (ADC) der nächstfolgenden Aufbereitungsstufe steuert,

- daß sich die aufeinanderfolgenden Phasen (DEC,DECDON, ADC,ADCDON,TRA und TRADON) aller Aufbereitungsstufen teilweise überlappen und bei störungsfreiem Verarbeitungsablauf jeweils mit vorgegebenem zeitlichen Abstand nacheinander wirksam werden, wobei der zeitliche Abstand jeweils zwischen Beginn der Freigabephase (z.B. DEC) und Beginn der zugehörigen Umschaltephase (DECDON) jeder Aufbereitungsstufe einheitlich entsprechend der für die Aufbereitung im Regelfall benötigten Zeitdauer bemessen ist,

- daß das Ein- und Abschalten der einzelnen Freigabe- und Umschaltephasen zusätzlich durch betriebsabhängige Steuersignale (z.B. $\overline{\text{DEC-WAIT}}$,ADCWAIT,BRACT sowie ADCIN-LOK, TRAINLOK) in der Weise beeinflußbar ist, daß bei nicht vollständiger Aufbereitung in der vorgegebenen Zeit während der Freigabephase (z.B. DEC) das Umschalten auf die zugehörige Umschaltephase (DECDON) vorübergehend gesperrt wird, während bei noch nicht ausführbarer Aufbereitung in der folgenden Aufbereitungsstufe die zugehörige Freigabephase (z.B. ADC oder TRA) vorübergehend gesperrt wird, so daß die jeweils steuernde Freigabe- oder Umschaltephase entsprechend verlängert wird, und

- daß die einzelnen Befehle jeweils mit Beginn einer Umschaltephase in einer Aufbereitungsstufe an die nächste Aufbereitungsstufe oder die Befehlsausführungseinheit weitergeleitet werden, wobei mit Beginn der Umschaltephase (DECDON) für die Decodierstufe außerdem die Bereitstellung eines neuen Befehls für die Decodierstufe veranlaßt und die Freigabe seiner Decodierung jeweils abhängig vom letzten Ausführungszyklus (LASTEXC) des n-ten Vorläuferbefehls bei insgesamt n nachfolgenden Aufbereitungsstufen bis zur Befehlsausführung gesteuert wird, während die Umschaltephase (TRADON) der letzten Aufbereitungsstufe jeweils mit dem ersten Ausführungszyklus (FIREXC) eines bereitgestellten Befehls beendet wird.

2. Befehlsverarbeitungseinheit nach Anspruch 1, **dadurch gekennzeichnet,**

- daß beginnend mit der Decodierstufe jeder Aufbereitungsstufe zwei bistabile Steuerelemente (D1 und D2 bzw. A1 und A2 bzw. T1 und T2) zugeordnet sind, von denen das erste Steuerelement (z.B. D1 oder A1 oder T1) mit seinem Setzen jeweils die Freigabephase (DEC bzw. ADC bzw. TRA) für die Bearbeitung des jeweils für die zugehörige Aufbereitungsstufe bereitstehenden Befehls kennzeichnet und von denen das jeweils zweite Steuerelement (D2 oder A2 oder T2) mit seinem Setzen jeweils die Umschaltephase (DECDON bzw. ADCDON bzw. TRADON) nach Abschluß der jeweiligen Bearbeitung in der zugehörigen Aufbereitungsstufe anzeigt, wobei das jeweils erste Steuerelement (z.B. D1) abhängig vom Setzen des jeweils zugehörigen zweiten Steuerelementes (D2) und das jeweils zweite Steuerelement (z.B. D2) abhängig vom Setzen des jeweils ersten Steuerelementes (A1) der nächstfolgenden Aufbereitungsstufe bzw. der Befehlsausführungseinheit zurückgesetzt wird, und

- daß die ersten Steuerelemente (D1, A1, T1) jeweils zu Beginn (z.B. mit Takt $T_B$) eines Maschinenzyklusses der Befehlsausführungseinheit und die zweiten Steuerelemente (D2, A2, T2) jeweils zu einem vorgegebenen späteren Zeitpunkt (z.B. mit Takt $T_M$) gesetzt werden, während das Rücksetzen der Steuerelemente jeweils rechtzeitig vor ihrem nachfolgenden wirksamen Setzzeitpunkt erfolgt.

3. Befehlsverarbeitungseinheit nach Anspruch 1 oder 2, **dadurch gekennzeichnet,** daß das Wirksamwerden der Fließbandsteuerung (PST) mit Einleiten der Freigabephase (DEC) für die Decodierstufe durch ein gesondertes Signal (SETDEC) während der Anlaufroutine der Befehlsausführungseinheit (EXU) zum Laden des Befehlspuffers (IB) mit Befehlen gesteuert wird, wobei der letzte Maschinenzyklus der Anlaufroutine durch das Signal (LASTEXC) gekennzeichnet wird, das bei ungestörtem Ablauf zeitlich mit dem Abschluß der Aufbereitung (TRADON = 1) des ersten Befehls der auszuführenden Befehlsfolge zusammenfällt.

4. Befehlsverarbeitungeinheit nach Anspruch 3, **dadurch gekennzeichnet,** daß bei nicht rechtzeitigem Abschluß der Aufbereitung (TRADON = 0) eines Befehls mit dem letzten Maschinenzyklus (LASTEXC = 1) der Anlaufroutine oder eines Vorgängerbefehls ein Steuerelement (LOSS) gesetzt wird, das anstelle des Signals (LASTEXC) zur Kennzeichnung des jeweils letzten Maschinenzyklusses die Einleitung der Freigabephase (DEC) für die Decodierstufe bewirkt, falls keine Sperrbedingung vorliegt, und dessen Setzdauer eine entsprechende Anzahl von Verlustzyklen (VZ) für die Befehlsausführungseinheit (EXU) zur Folge hat.

5. Befehlsverarbeitungseinheit nach Anspruch 3 oder 4, **dadurch gekennzeichnet,** daß nach Decodierung eines Sprungbefehls (z.B. BC) und nach Vorliegen der Entscheidung für eine erfüllte Sprungbedingung (SB) im letzten Ausführungszyklus des Vorgängerbefehls (z.B. CL) nach Abschluß der Aufbereitung für den Sprungbefehl (TRADON = 1) mit einem entsprechenden Steuersignal (BRACT) die bereits laufende Aufbereitung für den linearen Folgebefehl (z.B. ST) durch Sperren des Übergangs in die Umschaltephase (z.B. ADCDON) der jeweils aktiven Aufbereitungsstufe und durch Beendigung der laufenden zugehörigen Freigabephase (ADC) abgebrochen wird und stattdessen in Verbindung mit einem weiteren Steuersignal (SECEXC) während der Ausführung des Sprungbefehles (BC) die Freigabephase (DEC) für die Decodierstufe zur Decodierung des nichtlinearen Zielbefehles (z.B. XC) eingeleitet wird, und daß das einen Sprungbefehl (BC) mit erfüllter Sprungbedingung kennzeichnende Signal (BRACT) nach erfolgreicher Decodierung (DECDON = 1) des nichtlinearen Zielbefehls (XC) wieder abgeschaltet und damit die weitere Aufbereitung dieses Befehls freigegeben wird.

6. Befehlsverarbeitungseinheit nach einem der Ansprüche 3 bis 5, **dadurch gekennzeichnet,**

daß der Füllstand des die zu decodierenden Befehle liefernden Befehlspuffer (IB) fortlaufend überwacht und anhand der Befehlslängenangabe (DIL) des jeweils zu decodierenden Befehls geprüft wird, ob der Befehl vollständig im Befehlspuffer (IB) zur Verfügung steht, und daß bei nicht ausreichend gefülltem Befehlspuffer ein Steuersignal ($\overline{\text{DECWAIT}}$ = 0) ausgelöst wird, das bis zur Bereitstellung eines decodierbaren vollständigen Befehls das Einleiten der Umschaltephase (DECDON) für die Decodierstufe verhindert.

7. Befehlsverarbeitungseinheit nach einem der Ansprüche 3 bis 6, **dadurch gekennzeichnet,** daß nach erfolgreicher Decodierung eines Befehls durch eine Konfliktüberwachungseinheit (CONF-CTL) feststellbare Registerkonflikte mit Vorgängerbefehlen zu Sperrsignalen (ADCINLOK bzw. TRAINLOK) für die erste bzw. gegebenenfalls zweite Adreßrechnungsstufe der Fließbandsteuerung führen, durch die das Einleiten der zugehörigen Freigabephasen (ADC bzw. TRA) verhindert wird, bis die benötigten Registerinhalte verfügbar sind.

8. Befehlsverarbeitungseinheit nach Anspruch 7, **dadurch gekennzeichnet,** daß ausgehend von der Decodierstufe zwei weitere Aufbereitungsstufen vor Erreichen der Befehlsausführungeinheit (EXU) vorgesehen sind, so daß für die Registerkonfliktüberwachung nur der Vorgängerbefehl zu berücksichtigen ist.

9. Befehlsverarbeitungseinheit nach Anspruch 7 oder Anspruch 8, **dadurch gekennzeichnet,** daß für die beiden Adreßrechnungsstufen ein gemeinsamer Registersatz (ACPR/ACIR/ACCO) für die Übernahme des jeweiligen Befehls von der Decodierstufe vorgesehen ist.

10. Befehlsverarbeitungseinheit nach einem der Ansprüche 7 bis 9, **dadurch gekennzeichnet,** daß bei Ausführung von Ladebefehlen (L) und einem dadurch verursachten Registerkonflikt (ADCINLOK = 1) für den Folgebefehl ein zusätzliches Stuersignal (ADCWAIT) erzeugt wird, daß die Länge (RDL) des jeweils gelesenen Operanden mit der im Befehl vorgegebenen Länge (LOPL) des Operanden verglichen wird und daß bei einem infolge nicht ausreichender Länge des gelesenen Operanden erforderlich werdenden zweiten Speicherzugriff (HRDD) zur Vervollständigung des Operanden das zusätzliche Signal (ADCWAIT = 1) die Einleitung der Umschaltephase (ADCDON) nach Einleitung der Freigabephase (ADC) für die zugehörige Adreßrechnungsstufe sperrt, bis der zu lesende Operand vollständig ist.

FIG 1

FIG 2

FIG 3

EP 0 577 875 A1

FIG 4

IB-CTL

BR-CTL

FIG 5

EP 0 577 875 A1

FIG 6

EP 0 577 875 A1

# FIG 7

| ACC-FU | | PREF | READIN | PREF | PREF | (PREF) | READOP2 | READOP1 | READOP2 | READOP2 | WRITOP1 | READOP2 |
| --- | --- | --- | --- | --- | --- | --- | --- | --- | --- | --- | --- | --- |
| µPST | LASTEXC | FIREXC | LASTEXC | FIREXC | SECEXC | | LASTEXC | FIREXC | | | | |
| ZYK | | | | | | | | | | | | |
| RDI | | | | RIL=4 | | | | | | | | |
| RP | | | RIL=4 | | RIL=2 | RIL=4 | | | | | | |
| IBF | 7 | 5 | 3 | 7 0 | 4 1 | 3 | 7 5 | | | | | |
| DIL | 2 | 2 | (1) | ▨ | 3 | 2 | | | | | | |
| PCR | 12 | 16 | 1A | 4C | | 52 | | 56 | | | | |
| DECWAIT | | | | | | | | | | | | |
| DEC (D1) | BC | | ST | | XC | | STH | | | | | |
| DECDON (D2) | BC | | ST | | XC | | STH | | | | | |
| BRACT | | | | | | | | | | | | |
| ADC (A1) | | BC | SB | ST | | XC | | STH | | | | |
| ADCDON (A2) | CL | BC | | | | XC | | | STH | | | |
| TRA (T1) | CL | | BC | | | | XC | | | | | |
| TRADON (T2) | CL | | BC | | | | XC | | | | | |
| EXC-EO | | CL:E01 | CL;E02 | BC:E01 | BC:E02 | BC:E03 | BC:E04 | XC:E01 | XC:E02 | XC:E03 | XC:E04 | |
| LOSSC | | | | | | | | | | | | |

EP 0 577 875 A1

FIG 8

EP 0 577 875 A1

FIG 9

EP 0 577 875 A1

| ACC-FU µPST | READIN LASTEXC | (PREF) FIREXC | READOP2 LASTEXC | PREF | READOP2 FIREXC | WRITOP1 | WRITOP1 | READOP2 LASTEXC | READOP2 FIREXC | WRITOP1 | WRITOP1 |
|---|---|---|---|---|---|---|---|---|---|---|---|
| ZYK | | | | | | | | | | | |
| RDI | | | | | | | | | | | |
| RP | | | | RIL=4 | | | | | | | |
| IBF | 0 | 5 | | 2 | | 6 | | | 3 | | |
| DIL | 3 | 3 | | 3 | | | | | | | |
| PCR | 00 | 06 | | 0C | | | | | 12 | | |
| DECWAIT | | | HPREF | | | | | | | | |
| DEC (D1) | MVC1 | | MVC2 | | | | | MVC3 | | | |
| DECDON (D2) | MVC1 | | MVC2 | | | | | MVC3 | | | |
| BRACT | | | | | | | | | | | |
| ADC (A1) | SB | MVC1 | MVC2 | | | | | MVC3 | | | |
| ADCDON (A2) | BCT | MVC1 | | MVC2 | | | | | MVC3 | | |
| TRA (T1) | BCT | MVC1 | | | | | | MVC2 | | | |
| TRADON (T2) | BCT | | MVC1 | | | | | MVC2 | | | |
| EXC-E0 | | BCT:E01 | BCT:E02 V2 | | MVC:E01 | MVC:E02 | MVC:E03 | MVC:E04 | | MVC:E02 | MVC:E03 |
| LOSSC | | | | | | | | | MVC2:E01 | | |

FIG 10

# FIG 11

EP 0 577 875 A1

FIG 12

ACC-FU

μPST

ZYK

DEC (D1)

DECDON (D2)

ADCINLOK

ADC (A1)

LRDD

ADCWAIT

ADCDON (A2)

TRAINLOK

TRA (T1)

TRADON (T2)

EXC-EO

LOSSC

| READOP (OP2-S) LASTEXC | FIREXC | READOP (OP2-L) LASTEXC | FIREXC | LASTEXC | RAEDOP (OP2-A) | FIREXC | LASTEXC |

DEC (D1): L ... A ... X

DECDON (D2): L ... A ... X

ADC (A1): L ... A ... X

LRDD: RDL=4

ADCDON (A2): S ... L ... A ... X

TRA (T1): S ... L ... A ... X

TRADON (T2): S ... L ... A ... X

EXC-EO: S:EO1 S:EO2 L:EO1 L:EO2 //X// A:EO1 A:EO2 X:EO1

EP 0 577 875 A1

# FIG 13

EP 0 577 875 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 117 655 (COULEUR) 5. September 1984 * Seite 19, Zeile 1 - Seite 23, Zeile 29 * * Seite 25, Zeile 26 - Seite 33, Zeile 22; Abbildungen 7-15 * --- | 1-10 | G06F9/38 |
| A | US-A-4 449 184 (POHLMAN, III ET AL.) 15. Mai 1984 * Spalte 10, Zeile 8 - Spalte 11, Zeile 47 * --- | 3,4 | |
| X | US-A-3 254 329 (LUKOFF ET AL.) 31. Mai 1966 * Spalte 19, Zeile 48 - Spalte 23, Zeile 58; Abbildung 3 * --- | 1 | |
| A | DIGITAL TECHNICAL JOURNAL Nr. 1, August 1985, Seiten 24 - 42 MARIO TROIANI ET AL. 'The VAX 8600 I Box, a Pipelined Implementation of the VAX Architecture' * Seite 29, linke Spalte, Zeile 13 - Seite 31, linke Spalte, Zeile 10 * ----- | 1-10 | |

**RECHERCHIERTE SACHGEBIETE (Int. Cl.5)**

G06F

Der vorliegende Recherchenbericht wurde für alle Patentansprüche erstellt

| Recherchenort | Abschlußdatum der Recherche | Prüfer |
|---|---|---|
| DEN HAAG | 22 FEBRUAR 1993 | DASKALAKIS T. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..........................................................................
& : Mitglied der gleichen Patentfamilie, übereinstimmendes
    Dokument